# EUROPEAN PATENT APPLICATION

(11) **EP 4 164 170 A1**
(43) Date of publication of application: **12.04.2023**
(21) Application number: 21827920.6
(22) Date of filing: 11.03.2021
(51) Int. Cl.: H04L 5/14

(54) **COMMUNICATION METHOD AND APPARATUS**

(30) Priority: 22.06.2020 CN 202010575126
(71) Applicant: Huawei Technologies Co., Ltd., Longgang District, Shenzhen, Guangdong 518129 (CN)
(72) Inventor: LIU, Jianfei, Shenzhen, Guangdong 518129 (CN); WANG, Jinshan, Shenzhen, Guangdong 518129 (CN); SUN, Yanbin, Shenzhen, Guangdong 518129 (CN)
(74) Representative: Huawei European IPR
(86) International application number: PCT/CN2021/080249
(87) International publication number: WO 2021/258781

(57) **Abstract**

This application provides a communication method and a communications apparatus. The method includes: A first device obtains a communication rate of a second device, and obtains asymmetric rate transmission capability information supported by the second device. Then the first device determines, based on asymmetric rate transmission capability information supported by the first device, the asymmetric rate transmission capability information supported by the second device, a first communication rate of the first device, and the second communication rate, a first asymmetric rate transmission capability supported by both the first device and the second device. Finally, the first device determines passband frequency information corresponding to the first asymmetric rate transmission capability; and based on the passband frequency information, selects, from a data transmit link, a high-pass filter and/or a low-pass filter corresponding to the passband frequency information to perform filtering processing, and selects, from a data receive link, a high-pass filter and/or a low-pass filter corresponding to the passband frequency information to perform filtering processing. Therefore, asymmetric rate transmission can be implemented, and EC processing does not need to be performed at a receive end.

## Description

This application claims priority to Chinese Patent Application No. 202010575126.7, filed with the China National Intellectual Property Administration on June 22, 2020 and entitled "COMMUNICATION METHOD AND COMMUNICATIONS APPARATUS", which is incorporated herein by reference in its entirety.

### TECHNICAL FIELD

This application relates to the field of communication technologies, and in particular, to a communication method and a communications apparatus.

### BACKGROUND

An in-vehicle Ethernet is a new local area network connecting in-vehicle electronic units. An in-vehicle Ethernet communications device includes an in-vehicle gateway and an in-vehicle/out-of-vehicle component. The in-vehicle/out-of-vehicle component is, for example, a display, a controller, a radar, or a camera. Currently, the in-vehicle Ethernet communications device mainly includes an interconnection between in-vehicle gateways and an interconnection between the in-vehicle/out-of-vehicle component and the in-vehicle gateway. In a scenario of the interconnection between the in-vehicle/out-of-vehicle component and the in-vehicle gateway, communication rates at two ends of a communication link are generally asymmetric. Currently, a high-rate (a rate greater than 1 Gbps) in-vehicle Ethernet communications standard supports a full-duplex (full duplex, FDX) communication mode. In the full-duplex communication mode, each of the two ends of the communication link may simultaneously send data to a peer end and receive data from the peer end, and may perform echo cancellation (echo cancellation, EC) processing at a receive end, that is, cancel a transmitted signal from a received signal.

In the foregoing full-duplex communication mode, an existing method for implementing asymmetric rate transmission is as follows: Switching to a low power idle (low power idle, LPI) mode is proposed to adjust a communication rate of a communication link. The LPI mode includes five main states: a sleep state, a silent state, a refresh state, a wake state, and an active state. A corresponding time is set for each state. When the in-vehicle Ethernet communications device determines that there is no data that needs to be transmitted on the current link, the in-vehicle Ethernet communications device sends a sleep (sleep) signal to a peer end to enter the LPI mode. Then the link enters the silent state. After the time of the silent state expires, the in-vehicle Ethernet communications device sends a refresh (refresh) signal to the peer end for link synchronization. When the in-vehicle Ethernet communications device determines that there is data that needs to be transmitted on the current link, the in-vehicle Ethernet communications device sends a wake (wake) signal to the peer end to enter the active state for data transmission, and enters the LPI mode when there is no data to be transmitted again.

However, in the foregoing method, the communication rate of the communication link is adjusted in the full-duplex communication mode through switching of the LPI mode. When the in-vehicle Ethernet communications device determines that there is no data that needs to be transmitted on the current link, the in-vehicle Ethernet communications device enters the LPI mode. When the in-vehicle Ethernet communications device determines that there is data that needs to be transmitted on the current link, the in-vehicle Ethernet communications device communicates by using the full-duplex communication mode. However, EC processing needs to be performed at the receive end in the communication in the full-duplex communication mode. In this case, complexity is high, and power consumption is relatively high.

### SUMMARY

This application provides a communication method and a communications apparatus, to implement asymmetric rate transmission. Two ends of a communication link do not need to perform EC processing at receive ends, thereby reducing power consumption.

According to a first aspect, this application provides a communication method, including: A first device first obtains a second communication rate of a second device, and then obtains asymmetric rate transmission capability information supported by the second device. Then the first device determines, based on asymmetric rate transmission capability information supported by the first device, the asymmetric rate transmission capability information supported by the second device, a first communication rate of the first device, and the second communication rate, a first asymmetric rate transmission capability supported by both the first device and the second device. The first asymmetric rate transmission capability includes two communication rates used to implement asymmetric transmission. Finally, the first device determines passband frequency information corresponding to the first asymmetric rate transmission capability; and based on the passband frequency information, selects, from a data transmit link, a high-pass filter and/or a low-pass filter corresponding to the passband frequency information to perform filtering processing, and selects, from a data receive link, a high-pass filter and/or a low-pass filter corresponding to the passband frequency information to perform filtering processing.

In the communication method provided in the first aspect, the first device obtains the communication rate of the second device and the asymmetric rate transmission capability information supported by the second device. Then the first device determines, based on the asymmetric rate transmission capability information supported by the first device, the asymmetric rate transmission capability information supported by the second device, the first communication rate of the first device, and the second communication rate, the first asymmetric rate transmission capability supported by both the first device and the second device. The first device determines the passband frequency information corresponding to the first asymmetric rate transmission capability; and based on the passband frequency information, selects, from the data transmit link, the high-pass filter and/or the low-pass filter corresponding to the passband frequency information to perform filtering processing, and selects, from the data receive link, the high-pass filter and/or the low-pass filter corresponding to the passband frequency information to perform filtering processing. Therefore, a high-rate signal and a low-rate signal at the receive end are separated on a spectrum, so that EC cancellation does not need to be performed at the receive end, thereby reducing power consumption.

In a possible design, the passband frequency information includes a first passband frequency, a second passband frequency, and a third passband frequency. A start frequency of a spectrum corresponding to a low communication rate in the first asymmetric rate transmission capability is 0, and an end frequency is the first passband frequency. A start frequency of a spectrum corresponding to a high communication rate in the first asymmetric rate transmission capability is the second passband frequency, and an end frequency is the third passband frequency. A communication rate is a rate at which a device sends data to a peer device.

That the first device determines the passband frequency information corresponding to the first asymmetric rate transmission capability may be specifically as follows:
The first device determines, based on a prestored correspondence between an asymmetric rate transmission capability and the passband frequency information, the passband frequency information corresponding to the first asymmetric rate transmission capability.

In this implementation, a high-pass filter bank with a plurality of passband frequencies and a low-pass filter bank with a plurality of passband frequencies are disposed on the data transmit link and the data receive link between the first device and the second device in advance. Different passband frequency information corresponds to different high-pass filters and different low-pass filters. A high-pass filter and a low-pass filter on the corresponding data transmit link and a high-pass filter and a low-pass filter on the data receive link may be determined based on the passband frequency information, to implement asymmetric rate transmission at a plurality of rates.

In a possible design, the data transmit link of the first device includes a first low-pass filter and a first high-pass filter, and the data receive link of the first device includes a second low-pass filter and a second high-pass filter. That based on the passband frequency information, the first device selects, from the data transmit link, the high-pass filter and/or the low-pass filter corresponding to the passband frequency information to perform filtering processing, and selects, from the data receive link, the high-pass filter and/or the low-pass filter corresponding to the passband frequency information to perform filtering processing may be specifically as follows:

If the first communication rate is less than the second communication rate, the first device performs filtering processing on the data transmit link by using the first low-pass filter. A passband frequency of the first low-pass filter is the first passband frequency. The first device performs filtering processing on the data receive link by using the second high-pass filter. A passband frequency of the second high-pass filter is the second passband frequency.

If the first communication rate is greater than the second communication rate, the first device performs filtering processing on the data transmit link by using the first low-pass filter and the first high-pass filter. A passband frequency of the first low-pass filter is the third passband frequency. A passband frequency of the first high-pass filter is the second passband frequency. The first device performs filtering processing on the data receive link by using the second low-pass filter. A passband frequency of the second low-pass filter is the first passband frequency.

Through filtering processing in this implementation, the high-rate signal and the low-rate signal at the receive end of the first device are separated on a spectrum, and EC processing does not need to be performed at the receive end of the first device; and the high-rate signal and the low-rate signal at the receive end of the second device are separated on a spectrum, and EC processing does not need to be performed at the receive end of the second device, thereby reducing power consumption.

In a possible design, that the first device determines, based on the asymmetric rate transmission capability information supported by the first device, the asymmetric rate transmission capability information supported by the second device, the first communication rate of the first device, and the second communication rate, the first asymmetric rate transmission capability supported by both the first device and the second device may be specifically as follows:
The first device determines, based on the asymmetric rate transmission capability information supported by the first device and the asymmetric rate transmission capability information supported by the second device, asymmetric rate transmission capability information shared by the first device and the second device.

The first device determines that an asymmetric rate transmission capability matching the first communication rate and the second communication rate in the asymmetric rate transmission capability information shared by the first device and the second device is the first asymmetric rate transmission capability.

In a possible design, that the first device determines, based on the asymmetric rate transmission capability information supported by the first device, the asymmetric rate transmission capability information supported by the second device, the first communication rate of the first device, and the second communication rate, the first asymmetric rate transmission capability supported by both the first device and the second device may be specifically as follows:

The first device prioritizes, based on the first communication rate and the second communication rate, the asymmetric rate transmission capability information supported by the first device, to obtain the asymmetric rate transmission capability information in a first order. An asymmetric rate transmission capability including two communication rates separately matching data transmission directions and magnitudes of the first communication rate and the second communication rate has a highest priority.

The first device prioritizes, based on the first communication rate and the second communication rate, the asymmetric rate transmission capability information supported by the second device, to obtain the asymmetric rate transmission capability information in a second order.

The first device determines the first asymmetric rate transmission capability based on the asymmetric rate transmission capability information in the first order and the asymmetric rate transmission capability information in the second order.

In a possible design, that the first device obtains the asymmetric rate transmission capability information supported by the second device may be specifically as follows:
The first device receives indication information sent by the second device. The indication information is used to indicate the asymmetric rate transmission capability information supported by the second device.

In a possible design, the method further includes:
The first device obtains, based on upper-layer configuration information, the asymmetric rate transmission capability information supported by the first device.

In a possible design, before the first device determines the passband frequency information corresponding to the first asymmetric rate transmission capability, the method further includes:

The first device performs link training with the second device. The link training includes channel equalization coefficient training.

In the communication method provided in this implementation, EC processing does not need to be performed at the receive end. Therefore, EC coefficient training does not need to be performed in a link training phase, and only channel equalization coefficient training needs to be performed, to simplify a link training process and shorten a processing time of the link training.

In a possible design, before the first device determines the passband frequency information corresponding to the first asymmetric rate transmission capability, the method may further include:
The first device sends the first asymmetric rate transmission capability to the second device.

The first device receives second asymmetric rate transmission capability information sent by the second device, and determines that the first asymmetric rate transmission capability is the same as the second asymmetric rate transmission capability information.

In the communication method provided in this implementation, the two parties confirm that the asymmetric rate transmission capabilities determined by the two parties are the same, and then perform data transmission, to improve accuracy of data transmission.

In a possible design, before the first device obtains the asymmetric rate transmission capability information supported by the second device, the method may further include:
The first device determines that the first communication rate is different from the second communication rate.

In a possible design, the method may further include:
When the first device determines that the first communication rate is the same as the second communication rate, the first device performs link training with the second device. The link training includes channel equalization coefficient training and echo cancellation coefficient training.

The first device performs data transmission with the second device based on a symmetric rate transmission capability supported by the first device and the second device.

In the communication method provided in this implementation, when the first device determines that the first communication rate is the same as the second communication rate, the first device performs link training with the second device. The link training includes channel equalization coefficient training and echo cancellation coefficient training. Then the first device performs data transmission with the second device based on the symmetric rate transmission capability supported by the first device and the second device. This is compatible with symmetric rate transmission.

According to a second aspect, this application provides a communications device, including:
an obtaining module, configured to: obtain a second communication rate of a second device, and obtain asymmetric rate transmission capability information supported by the second device;
a determining module, configured to determine, based on asymmetric rate transmission capability information supported by the communications device, the asymmetric rate transmission capability information supported by the second device, a first communication rate of the communications device, and the second communication rate, a first asymmetric rate transmission capability supported by both the communications device and the second device, where the first asymmetric rate transmission capability includes two communication rates used to implement asymmetric transmission; and
a data transmission module, configured to: determine passband frequency information corresponding to the first asymmetric rate transmission capability; and based on the passband frequency information, select, from a data transmit link, a filter corresponding to the passband frequency information to perform filtering processing, and select, from a data receive link, a filter corresponding to the passband frequency information to perform filtering processing.

In a possible design, the passband frequency information includes a first passband frequency, a second passband frequency, and a third passband frequency. A start frequency of a spectrum corresponding to a low communication rate in the first asymmetric rate transmission capability is 0, and an end frequency is the first passband frequency. A start frequency of a spectrum corresponding to a high communication rate in the first asymmetric rate transmission capability is the second passband frequency, and an end frequency is the third passband frequency. A communication rate is a rate at which a device sends data to a peer device.

The data transmission module is configured to determine, based on a prestored correspondence between an asymmetric rate transmission capability and the passband frequency information, the passband frequency information corresponding to the first asymmetric rate transmission capability.

In a possible design, the data transmit link of the communications device includes a first filter and a second filter, and the data receive link of the communications device includes a third filter and a fourth filter. The data transmission module is configured to:
if the first communication rate is less than the second communication rate, perform filtering processing on the data transmit link by using the first filter, where a passband frequency of the first filter is the first passband frequency; and perform filtering processing on the data receive link by using the third filter, where a passband frequency of the third filter is the second passband frequency; or
if the first communication rate is greater than the second communication rate, perform filtering processing on the data transmit link by using the first filter and the second filter, where a passband frequency of the first filter is the third passband frequency, and a passband frequency of the second filter is the second passband frequency; and perform filtering processing on the data receive link by using the third filter, where a passband frequency of the third filter is the first passband frequency.

In a possible design, the determining module is configured to:
determine, based on the asymmetric rate transmission capability information supported by the communications device and the asymmetric rate transmission capability information supported by the second device, asymmetric rate transmission capability information shared by the communications device and the second device; and
determine that an asymmetric rate transmission capability matching the first communication rate and the second communication rate in the asymmetric rate transmission capability information shared by the communications device and the second device is the first asymmetric rate transmission capability.

In a possible design, the determining module is configured to:
prioritize, based on the first communication rate and the second communication rate, the asymmetric rate transmission capability information supported by the communications device, to obtain the asymmetric rate transmission capability information in a first order, where an asymmetric rate transmission capability including two communication rates separately matching data transmission directions and magnitudes of the first communication rate and the second communication rate has a highest priority;
prioritize, based on the first communication rate and the second communication rate, the asymmetric rate transmission capability information supported by the second device, to obtain the asymmetric rate transmission capability information in a second order; and
determine the first asymmetric rate transmission capability based on the asymmetric rate transmission capability information in the first order and the asymmetric rate transmission capability information in the second order.

In a possible design, the obtaining module is configured to:
receive indication information sent by the second device, where the indication information is used to indicate the asymmetric rate transmission capability information supported by the second device.

In a possible design, the obtaining module is further configured to:
obtain, based on upper-layer configuration information, the asymmetric rate transmission capability information supported by the communications device.

In a possible design, the data transmission module is further configured to:
before the passband frequency information corresponding to the first asymmetric rate transmission capability is determined, perform link training with the second device, where the link training includes channel equalization coefficient training.

In a possible design, the data transmission module is further configured to:
before the passband frequency information corresponding to the first asymmetric rate transmission capability is determined, send the first asymmetric rate transmission capability to the second device;
receive second asymmetric rate transmission capability information sent by the second device; and
determine that the first asymmetric rate transmission capability is the same as the second asymmetric rate transmission capability information.

In a possible design, the data transmission module is further configured to:
before the obtaining module obtains the asymmetric rate transmission capability information supported by the second device, determine that the first communication rate is different from the second communication rate.

In a possible design, the data transmission module is further configured to:
when it is determined that the first communication rate is the same as the second communication rate, perform link training with the second device, where the link training includes channel equalization coefficient training and echo cancellation coefficient training; and
perform data transmission with the second device based on a symmetric rate transmission capability supported by the communications device and the second device.

For beneficial effects of the communications device provided in the second aspect and the possible designs of the second aspect, refer to the beneficial effects brought by the first aspect and the possible implementations of the first aspect. Details are not described herein again.

According to a third aspect, this application provides a communications device, including:
a receiver, configured to: obtain a second communication rate of a second device, and obtain asymmetric rate transmission capability information supported by the second device;
a processor, configured to determine, based on asymmetric rate transmission capability information supported by the communications device, the asymmetric rate transmission capability information supported by the second device, a first communication rate of the communications device, and the second communication rate, a first asymmetric rate transmission capability supported by both the communications device and the second device, where the first asymmetric rate transmission capability includes two communication rates used to implement asymmetric transmission, and
the processor is further configured to determine passband frequency information corresponding to the first asymmetric rate transmission capability;
a data transmit link, where at least one high-pass filter and at least one low-pass filter are disposed on the data transmit link;
a data receive link, where at least one high-pass filter and at least one low-pass filter are configured on the data receive link; and
a transmitter, configured to send a data signal to the second device.

The receiver is further configured to receive a data signal sent by the second device.

The processor is further configured to: based on the passband frequency information, select, from the data transmit link, a high-pass filter and/or a low-pass filter corresponding to the passband frequency information to perform filtering processing, and select, from the data receive link, a high-pass filter and/or a low-pass filter corresponding to the passband frequency information to perform filtering processing.

In a possible design, the passband frequency information includes a first passband frequency, a second passband frequency, and a third passband frequency. A start frequency of a spectrum corresponding to a low communication rate in the first asymmetric rate transmission capability is 0, and an end frequency is the first passband frequency. A start frequency of a spectrum corresponding to a high communication rate in the first asymmetric rate transmission capability is the second passband frequency, and an end frequency is the third passband frequency. A communication rate is a rate at which a device sends data to a peer device.

The processor is configured to determine, based on a prestored correspondence between an asymmetric rate transmission capability and the passband frequency information, the passband frequency information corresponding to the first asymmetric rate transmission capability.

In a possible design, the data transmit link of the communications device includes a first low-pass filter and a first high-pass filter, and the data receive link of the communications device includes a second low-pass filter and a second high-pass filter. The processor is configured to:
if the first communication rate is less than the second communication rate, perform filtering processing on the data transmit link by using the first low-pass filter, where a passband frequency of the first low-pass filter is the first passband frequency; and perform, by the communications device, filtering processing on the data receive link by using the second high-pass filter, where a passband frequency of the second high-pass filter is the second passband frequency; or
if the first communication rate is greater than the second communication rate, perform filtering processing on the data transmit link by using the first low-pass filter and the first high-pass filter, where a passband frequency of the first low-pass filter is the third passband frequency, and a passband frequency of the first high-pass filter is the second passband frequency; and perform, by the communications device, filtering processing on the data receive link by using the second low-pass filter, where a passband frequency of the second low-pass filter is the first passband frequency.

In a possible design, the processor is configured to:
determine, based on the asymmetric rate transmission capability information supported by the communications device and the asymmetric rate transmission capability information supported by the second device, asymmetric rate transmission capability information shared by the communications device and the second device; and
determine that an asymmetric rate transmission capability matching the first communication rate and the second communication rate in the asymmetric rate transmission capability information shared by the communications device and the second device is the first asymmetric rate transmission capability.

In a possible design, the processor is configured to:
prioritize, based on the first communication rate and the second communication rate, the asymmetric rate transmission capability information supported by the communications device, to obtain the asymmetric rate transmission capability information in a first order, where an asymmetric rate transmission capability including two communication rates separately matching data transmission directions and magnitudes of the first communication rate and the second communication rate has a highest priority;
prioritize, based on the first communication rate and the second communication rate, the asymmetric rate transmission capability information supported by the second device, to obtain the asymmetric rate transmission capability information in a second order; and
determine the first asymmetric rate transmission capability based on the asymmetric rate transmission capability information in the first order and the asymmetric rate transmission capability information in the second order.

In a possible design, the receiver is configured to:
receive indication information sent by the second device, where the indication information is used to indicate the asymmetric rate transmission capability information supported by the second device.

In a possible design, the receiver is further configured to:
obtain, based on upper-layer configuration information, the asymmetric rate transmission capability information supported by the communications device.

In a possible design, the processor is further configured to:
before the passband frequency information corresponding to the first asymmetric rate transmission capability is determined, perform link training with the second device, where the link training includes channel equalization coefficient training.

In a possible design, the processor is further configured to:
before the passband frequency information corresponding to the first asymmetric rate transmission capability is determined, send the first asymmetric rate transmission capability to the second device;
receive second asymmetric rate transmission capability information sent by the second device; and
determine that the first asymmetric rate transmission capability is the same as the second asymmetric rate transmission capability information.

In a possible design, the processor is further configured to:
before the receiver obtains the asymmetric rate transmission capability information supported by the second device, determine that the first communication rate is different from the second communication rate.

In a possible design, the processor is further configured to:
when it is determined that the first communication rate is the same as the second communication rate, perform link training with the second device, where the link training includes channel equalization coefficient training and echo cancellation coefficient training; and
perform data transmission with the second device based on a symmetric rate transmission capability supported by the communications device and the second device.

For beneficial effects of the communications device provided in the third aspect and the possible designs of the third aspect, refer to the beneficial effects brought by the first aspect and the possible implementations of the first aspect. Details are not described herein again.

According to a fourth aspect, this application provides a computer readable storage medium. The computer readable storage medium stores executable instructions. When at least one processor of a communications device executes the executable instructions, the communications device performs the communication method in the first aspect and any possible design of the first aspect.

According to a fifth aspect, this application provides a program product. The program product includes executable instructions, and the executable instructions are stored in a computer readable storage medium. At least one processor of a communications device may read the executable instructions from the computer readable storage medium. The at least one processor executes the executable instructions, so that the communications device performs the communication method in the first aspect and any possible design of the first aspect.

### BRIEF DESCRIPTION OF DRAWINGS

FIG. 1 is a schematic diagram of architecture of an Ethernet communications system;
FIG. 2 is a schematic diagram of an application scenario of in-vehicle Ethernet communication according to this application;
FIG. 3 is a schematic diagram of an activation process of an in-vehicle Ethernet communication link;
FIG. 4 is a flowchart of an embodiment of a communication method according to this application;
FIG. 5 is a schematic diagram of spectrum distribution of a low-pass communication rate and a high-pass communication rate in a first asymmetric rate transmission capability;
FIG. 6 is a schematic diagram of a physical-layer signal processing process;
FIG. 7 is a flowchart of an interaction in an embodiment of a communication method according to this application;
FIG. 8A and FIG. 8B is a flowchart of an interaction in an embodiment of a communication method according to this application;
FIG. 9 is a schematic diagram of a physical link processing process corresponding to a communication method in an embodiment shown in FIG. 8A and FIG. 8B;
FIG. 10A and FIG. 10B is a flowchart of an interaction in an embodiment of a communication method according to this application;
FIG. 11 is a schematic diagram of a physical link processing process corresponding to a communication method in an embodiment shown in FIG. 9;
FIG. 12 is a schematic diagram of a structure of an embodiment of a communications device according to this application; and
FIG. 13 is a schematic diagram of a structure of a communications device according to this application.

### DESCRIPTION OF EMBODIMENTS

In the embodiments of this application, a word such as "example" or "for example" is used to indicate an example, illustration, or description. Any embodiment or solution described as "example" or "for example" in the embodiments of this application should not be explained as being more preferred or having more advantages than another embodiment or solution. Exactly, use of the word "example", "for example", or the like is intended to present a related concept in a specific manner.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects.

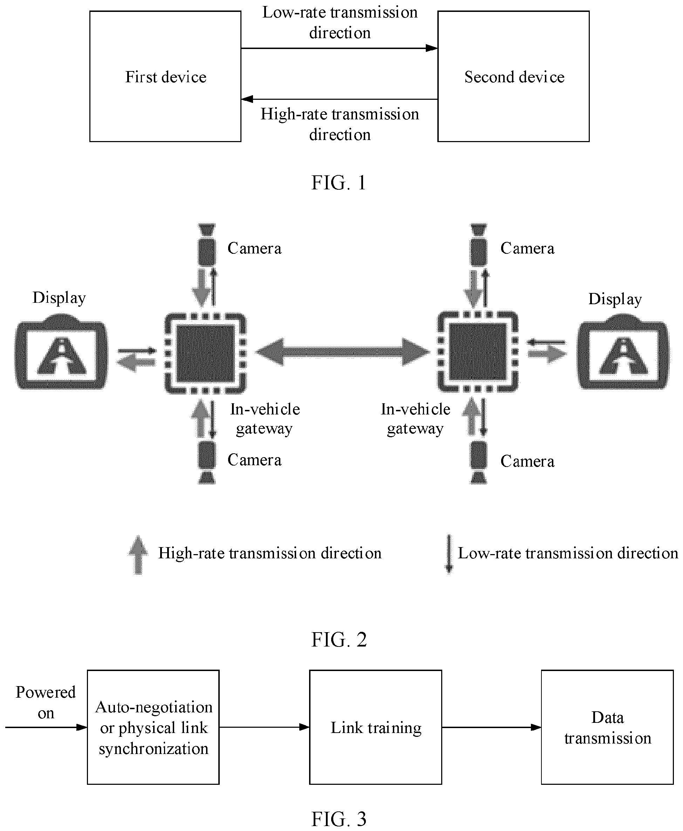

A communication method provided in this application may be applied to an Ethernet communications system. FIG. 1 is a schematic diagram of architecture of an Ethernet communications system. As shown in FIG. 1, the Ethernet communications system in this application may include a first device and a second device. Communication rates of the first device and the second device are asymmetric. For example, the communication rate of the first device is less than the communication rate of the second device. It should be noted that a communication rate is a rate at which a device sends data to a peer device. For example, the communication rate of the first device is a rate at which the first device sends data to the second device. A direction in which the first device transmits data to the second device is a low-rate transmission direction, which may also be referred to as a downlink transmission direction. A direction in which the second device transmits data to the first device is a high-rate transmission direction, which may also be referred to as an uplink transmission direction. The first device may be an Ethernet transmission gateway such as an in-vehicle gateway, a home gateway, an enterprise gateway, or the like. The second device may be an in-vehicle/out-of-vehicle component or a terminal device. The in-vehicle/out-of-vehicle component is, for example, a display, a controller, a radar, or a camera. This application provides a communication method, to implement asymmetric rate transmission at a plurality of rates between the first device and the second device. Two ends of a communication link do not need to perform EC processing at receive ends, thereby reducing power consumption. This is compatible with symmetric rate transmission.

In-vehicle Ethernet communication is used as an example. FIG. 2 is a schematic diagram of an application scenario of in-vehicle Ethernet communication according to this application. As shown in FIG. 2, there are two in-vehicle gateways in FIG. 2. Each in-vehicle gateway is separately connected to two cameras and one display. The two in-vehicle gateways are interconnected. Communication rates of the two in-vehicle gateways are symmetric, communication rates of the in-vehicle gateway and the camera are asymmetric, and communication rates of the in-vehicle gateway and the display are asymmetric. FIG. 2 shows data transmission directions (including a low-rate transmission direction and a high-rate transmission direction) when two devices are interconnected.

In the conventional technologies, to implement asymmetric rate transmission, communication rate adjustment of a communication link is implemented in a full-duplex communication mode through switching of an LPI mode. However, in the full-duplex communication mode, EC processing needs to be performed at the receive end. In this case, complexity is high, and power consumption is relatively high. To resolve this problem, this application provides a communication method and a communications apparatus, which may be applied to a scenario in which communication rates at two ends of a communication link are very different. For example, a ratio of a communication rate of a second device to a communication rate of a first device shown in FIG. 1 is greater than or equal to 100:1. When a communication rate in a high-rate direction greatly exceeds a communication rate in a low-rate direction, signals in the two directions may be separated on a spectrum. In this application, a high-pass filter bank and a low-pass filter bank with a plurality of passband frequencies are respectively disposed on a data transmit link and a data receive link between the first device and the second device. Passband frequency information corresponding to different asymmetric rate transmission capabilities is prestored. After the first device obtains a communication rate of the second device and asymmetric rate transmission capability information supported by the second device, the first device determines, based on asymmetric rate transmission capability information supported by the first device, the asymmetric rate transmission capability information supported by the second device, a first communication rate of the first device, and the second communication rate of the second device, a first asymmetric rate transmission capability supported by both the first device and the second device. Then the first device determines passband frequency information corresponding to the first asymmetric rate transmission capability; and based on the passband frequency information, selects, from a data transmit link, a high-pass filter and/or a low-pass filter corresponding to the passband frequency information to perform filtering processing, and selects, from a data receive link, a high-pass filter and/or a low-pass filter corresponding to the passband frequency information to perform filtering processing. Specifically, a signal in a direction of a high communication rate separately passes through a high-pass filter on a data transmit link and a high-pass filter on a data receive link. A low-rate signal in the high-rate direction is filtered by using the high-pass filter from a high-rate signal and a low-rate signal that are mixed. Therefore, the high-rate signal and the low-rate signal at the receive end are separated on a spectrum, so that EC cancellation does not need to be performed at the receive end, thereby reducing power consumption. A signal in a direction of a low communication rate passes through a low-pass filter on a data receive link. A high-rate signal in a low-rate direction is filtered by using the low-pass filter from a high-rate signal and a low-rate signal that are mixed. Therefore, the high-rate signal and the low-rate signal at the receive end are separated on a spectrum, so that EC cancellation does not need to be performed at the receive end, thereby reducing power consumption. The following describes in detail the technical solutions provided in this application with reference to the accompanying drawings.

Before an in-vehicle Ethernet communications device performs data transmission, a communication link needs to be activated. The following briefly describes a link activation process. FIG. 3 is a schematic diagram of an activation process of an in-vehicle Ethernet communication link according to this application. As shown in FIG. 3, after a communication link between two in-vehicle Ethernet communications devices (hereinafter briefly referred to as communications devices) is powered on, each of the communications devices at two ends of the communication link selects, based on a capability of the communications device, to enter an auto-negotiation phase or a physical link synchronization phase. In the auto-negotiation phase or the physical link synchronization phase, each of the communications devices at the two ends of the communication link determines communications rates (different rates are supported in different standards) and communication modes of the communications device and the peer end. The communication mode may be symmetric rate transmission or asymmetric rate transmission. Specifically, the symmetric rate transmission indicates that the communications devices at the two ends of the communication link have the same communication rate, and the asymmetric rate transmission indicates that the communications devices at the two ends of the communication link have different communication rates. If it is determined that the communication mode is the asymmetric rate transmission, in the auto-negotiation phase or the physical link synchronization phase, the communications devices at the two ends of the communication link need to determine, based on asymmetric rate transmission capability information supported by the communications devices at the two ends and the communication rates of the communications devices at the two ends, one piece of asymmetric rate transmission capability information supported by both the communications devices at the two ends, and then enter a training phase when the communications devices at the two ends of the communication link both confirm that the asymmetric rate transmission capability information determined by the communications devices at the two ends is the same. In the training phase, the communications devices at the two ends of the communication link send information training-related parameters to each other. If the communication mode determined in the auto-negotiation phase or the physical link synchronization phase is the asymmetric rate transmission, a channel equalization coefficient needs to be trained in the training phase (because the asymmetric rate transmission in this embodiment of this application does not require EC processing, an EC coefficient does not need to be trained). If the communication mode determined in the auto-negotiation phase or the physical link synchronization phase is the symmetric rate transmission, the channel equalization coefficient and the EC coefficient need to be trained in the training phase. After training is completed, the communications devices at the two ends of the communication link perform data transmission based on the determined asymmetric rate transmission capability information. In a data transmission process, a first device at one end is used as an example. Based on a first asymmetric rate transmission capability, the first device controls a corresponding high-pass filter and/or a corresponding low-pass filter on a data transmit link of the first device to perform filtering processing, and controls a corresponding high-pass filter and/or a corresponding low-pass filter on the data receive link of the first device to perform filtering processing, to filter out the low-rate signal in the high-rate direction. Through the filtering processing, the high-rate signal and the low-rate signal at the receive end are separated on the spectrum. EC cancellation does not need to be performed at the receive end, thereby reducing power consumption.

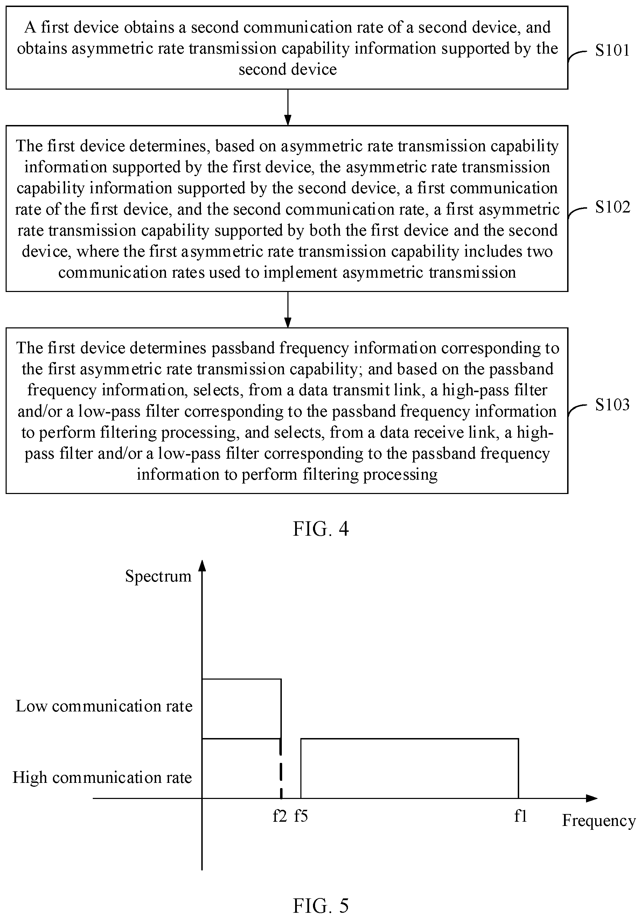

FIG. 4 is a flowchart of an embodiment of a communication method according to this application. As shown in FIG. 4, this embodiment may be performed by a first device. The first device may be a device such as an in-vehicle gateway, or may be an in-vehicle/out-of-vehicle component, or the like. The method in this embodiment may include the following steps:
S101: The first device obtains a second communication rate of a second device, and obtains asymmetric rate transmission capability information supported by the second device.

Specifically, the first device may receive the second communication rate sent by the second device. The asymmetric rate transmission capability information includes at least one asymmetric rate transmission capability. After a communication link is powered on, devices at two ends of the link enter an auto-negotiation phase. In the auto-negotiation phase, the first device and the second device may exchange asymmetric rate transmission capability information of the two parties with each other. In an implementable manner, step S101 may be that the first device receives indication information sent by the second device. The indication information is used to indicate the asymmetric rate transmission capability information supported by the second device. For example, the following Table 1 is an example of the indication information.

**Table 1: Asymmetric rate transmission capability information supported by the second device**

| Bit (bit) in a technical capability field | Capability description |
|---|---|
| A0 | An asymmetric rate transmission capabilityis 1000 Mbps and 10 Mbps |
| A1 | An asymmetric rate transmission capabilityis 10 Gbps and 10 Mbps |
| A2-A26 | Reserved |

In Table 1, A0-A26 is a technical capability field and is a link codeword for information exchange between the first device and the second device. In addition, AO-A26 is used to map the capability information of the first device and the second device. Herein, A0 represents that a supported asymmetric rate transmission capabilityis 1000 Mbps and 10 Mbps, A1 represents that a supported asymmetric rate transmission capabilityis 10 Gbps and 10 Mbps, and A2-A26 is reserved. That the asymmetric rate transmission capabilityis 1000 Mbps and 10 Mbps indicates that the first device supports a low communication rate of 10 Mbps and a high communication rate of 1000 Mbps. That the asymmetric rate transmission capabilityis 10 Gbps and 10 Mbps indicates that the first device supports a low communication rate of 10 Mbps and a high communication rate of 10 Gbps. The asymmetric rate transmission capability indicated in Table 1 does not indicate uplink and downlink transmission directions. In other words, an indication manner shown in Table 1 does not limit the uplink and downlink transmission directions. In another implementable manner, for example, the following Table 2 shows an example of the indication information. Table 2 indicates the uplink and downlink transmission directions.

**Table 2: Asymmetric rate transmission capability information supported by the second device**

| Bit (bit) in a technical capability field | Capability description |
|---|---|
| A0 | An asymmetric rate transmission capabilityis downlink 1000 Mbps and 10 Mbps |
| A1 | An asymmetric rate transmission capabilityis uplink 1000 Mbps and 10 Mbps |
| A2 | An asymmetric rate transmission capabilityis downlink 10 Gbps and 10 Mbps |
| A3 | An asymmetric rate transmission capabilityis uplink 10 Gbps and 10 Mbps |
| A4-A26 | Reserved |

In Table 2, A0-A26 is a technical capability field and is a link codeword for information exchange between the first device and the second device. In addition, A0-A26 is used to map capability information of the first device and the second device. Herein, A0 represents that a supported asymmetric rate transmission capabilityis downlink 1000 Mbps and 10 Mbps, A1 represents that a supported asymmetric rate transmission capabilityis uplink 1000 Mbps and 10 Mbps, A2 represents that a supported asymmetric rate transmission capabilityis downlink 10 Gbps and 10 Mbps, A3 represents that a supported asymmetric rate transmission capabilityis uplink 10 Gbps and 10 Mbps, and A4-A26 is reserved. That the asymmetric rate transmission capabilityis downlink 1000 Mbps and 10 Mbps indicates that the first device supports a low communication rate of 10 Mbps and a high communication rate of 1000 Mbps, and a direction in which the first device performs data transmission with the second device is a downlink transmission direction. That the asymmetric rate transmission capabilityis uplink 1000 Mbps and 10 Mbps indicates that the first device supports a low communication rate of 10 Mbps and a high communication rate of 1000 Mbps, and a direction in which the first device performs data transmission with the second device is an uplink transmission direction. That the asymmetric rate transmission capabilityis downlink 10 Gbps and 10 Mbps indicates that the first device supports a low communication rate of 10 Mbps and a high communication rate of 10 Gbps, and a direction in which the first device performs data transmission with the second device is a downlink transmission direction. That the asymmetric rate transmission capabilityis uplink 10 Gbps and 10 Mbps indicates that the first device supports a low communication rate of 10 Mbps and a high communication rate of 10 Gbps, and a direction in which the first device performs data transmission with the second device is an uplink transmission direction.

S102: The first device determines, based on asymmetric rate transmission capability information supported by the first device, the asymmetric rate transmission capability information supported by the second device, a first communication rate of the first device, and the second communication rate, a first asymmetric rate transmission capability supported by both the first device and the second device. The first asymmetric rate transmission capability includes two communication rates used to implement asymmetric transmission.

Specifically, the first device further needs to obtain the asymmetric rate transmission capability information supported by the first device. The first device may obtain, based on upper-layer configuration information, the asymmetric rate transmission capability information supported by the first device. The upper-layer configuration information may be media access control (media access control, MAC) layer configuration information or even upper-layer configuration information.

It may be understood that different first communication rates and different second communication rates correspond to different first asymmetric rate transmission capabilities. The communication rate of the second device may also be obtained in the auto-negotiation phase, and is sent by the second device to the first device.

After obtaining the asymmetric rate transmission capability information supported by the second device, the first device needs to determine the first asymmetric rate transmission capability supported by both the first device and the second device. In an implementable manner, step S102 may be specifically as follows:
S1021: The first device determines, based on the asymmetric rate transmission capability information supported by the first device and the asymmetric rate transmission capability information supported by the second device, asymmetric rate transmission capability information shared by the first device and the second device.

For example, the asymmetric rate transmission capability information supported by the first device is an asymmetric rate transmission capabilityof 1000 Mbps and 10 Mbps and an asymmetric rate transmission capabilityof 10 Gbps and 10 Mbps; and the asymmetric rate transmission capability information supported by the second device is an asymmetric rate transmission capabilityof 100 Mbps and 10 Mbps and an asymmetric rate transmission capabilityof 10 Gbps and 10 Mbps. In this case, the asymmetric rate transmission capability information shared by the first device and the second device is 10 Gbps and 10 Mbps.

S1022: The first device determines that an asymmetric rate transmission capability matching the first communication rate and the second communication rate in the asymmetric rate transmission capability information shared by the first device and the second device is the first asymmetric rate transmission capability.

For example, the first communication rate is 10 Mbps, that is, a rate at which the first device sends data to the second device is 10 Mbps; and the second communication rate is 10 Gbps, that is, a rate at which the second device sends data to the first device is 10 Gbps. If the asymmetric rate transmission capability information shared by the first device and the second device is 10 Gbps and 10 Mbps, and 100 Mbps and 10 Mbps, the asymmetric rate transmission capability matching the first communication rate and the second communication rate is 10 Gbps and 10 Mbps, that is, the first asymmetric rate transmission capability is 10 Gbps and 10 Mbps.

In another implementable manner, step S102 may be specifically as follows:
S1021': The first device prioritizes, based on the first communication rate and the second communication rate, the asymmetric rate transmission capability information supported by the first device, to obtain the asymmetric rate transmission capability information in a first order. An asymmetric rate transmission capability including two communication rates separately matching data transmission directions and magnitudes of the first communication rate and the second communication rate has a highest priority.

Specifically, the first device prioritizes, based on the first communication rate and the second communication rate according to a prioritizing rule, the asymmetric rate transmission capability information supported by the first device. The prioritizing rule may be as follows: First, the first communication rate and the second communication rate are compared with two communications rates in the asymmetric rate transmission capability supported by the first device, to compare data transmission directions and magnitudes. An asymmetric rate transmission capability including two communication rates respectively matching the data transmission directions and magnitudes of the first communication rate and the second communication rate is obtained through comparison. The matching herein indicates the consistent data transmission directions and the same magnitudes. In this case, the asymmetric rate transmission capability has the highest priority, and the priority of the asymmetric rate transmission capability is set to first. It should be noted that, if the transmission directions are not considered and only the magnitudes are compared, a priority of an asymmetric rate transmission capability with the same data transmission directions is set to second. Then a priority of an asymmetric rate transmission capability including two communication rates respectively matching the magnitudes of the first communication rate and the second communication rate is set to third. Finally, a priority of an asymmetric rate transmission capability including two communication rates respectively not matching the magnitudes of the first communication rate and the second communication rate is set. If there are a plurality of asymmetric rate transmission capabilities each including two communication rates respectively not matching the magnitudes of the first communication rate and the second communication rate, priorities may be randomly set. In this embodiment, when prioritizing is performed, the asymmetric rate transmission capability including the two communication rates respectively matching the data transmission directions and magnitudes of the first communication rate and the second communication rate may be first obtained through comparison. If the asymmetric rate transmission capability is obtained through comparison, the priority of the asymmetric rate transmission capability is set to first, and prioritizing for a remaining asymmetric rate transmission capability may be randomly performed. For example, the first communication rate is 10 Mbps, and the second communication rate is 10 Gbps. The direction in which the first device performs data transmission with the second device is the downlink transmission direction. The asymmetric rate transmission capability information supported by the first device is A0: the asymmetric transmission capability is downlink 1000 Mbps and 10 Mbps, A1: the asymmetric rate transmission capabilityis uplink 1000 Mbps and 10 Mbps, A2: the asymmetric rate transmission capability is downlink 10 Gbps and 10 Mbps, and A3: the asymmetric rate transmission capabilityis uplink 10 Gbps and 10 Mbps. After prioritizing is performed, the asymmetric rate transmission capability information in the first order is obtained as follows:
1. downlink 10 Gbps and 10 Mbps;
2. downlink 1000 Mbps and 10 Mbps;
3. uplink 10 Gbps and 10 Mbps; and
4. uplink 1000 Mbps and 10 Mbps.

S1022': The first device prioritizes, based on the first communication rate and the second communication rate, the asymmetric rate transmission capability information supported by the second device, to obtain the asymmetric rate transmission capability information in a second order.

Specifically, the first device prioritizes, based on the first communication rate and the second communication rate, the asymmetric rate transmission capability information supported by the second device. Similarly, the prioritizing rule may be the rule in step S1021'. For example, the first communication rate is 10 Mbps, and the second communication rate is 10 Gbps. The direction in which the first device performs data transmission with the second device is the downlink transmission direction. The asymmetric rate transmission capability information supported by the first device is A0: the asymmetric transmission capability is downlink 1000 Mbps and 10 Mbps, and A2: the asymmetric rate transmission capabilityis downlink 10 Gbps and 10 Mbps. After prioritizing is performed, the asymmetric rate transmission capability information in the second order is obtained as follows:
1. downlink 10 Gbps and 10 Mbps; and
2. downlink 1000 Mbps and 10 Mbps.

S1023': The first device determines the first asymmetric rate transmission capability based on the asymmetric rate transmission capability information in the first order and the asymmetric rate transmission capability information in the second order.

Specifically, the first device determines, based on the asymmetric rate transmission capability information in the first order and the asymmetric rate transmission capability information in the second order, the first asymmetric rate transmission capability supported by both the first device and the second device, for example, the asymmetric rate transmission capability information in the first order in the example of step S1022' and the asymmetric rate transmission capability information in the second order in the example of step S1023'. The first asymmetric rate transmission capability may be determined as downlink 10 Gbps and 10 Mbps.

It should be noted that prioritizing may further be that the first device and the second device respectively sort the asymmetric rate transmission capability information supported by the first device and the second device. In other words, the first device sorts the asymmetric rate transmission capability information supported by the first device, and the second device sorts the asymmetric rate transmission capability information supported by the second device. A specific prioritizing rule may be the rule in step S 1 021'. Then the asymmetric rate transmission capability with the highest priority is sent to the peer party, and the two parties determine the first asymmetric rate transmission capability. Alternatively, the two parties exchange prioritizing results with each other, and determine the first asymmetric rate transmission capability.

It should be further noted that whether to indicate uplink and downlink needs to be preset when the asymmetric rate transmission capability is indicated by using a bit in the technical capability field. If the indication is performed, the indication is performed when the two parties interact with each other. If the indication is not performed, uplink and downlink are not indicated when the two parties interact with each other. When uplink and downlink are not indicated, uplink and downlink are both supported by default.

S103: The first device determines passband frequency information corresponding to the first asymmetric rate transmission capability; and based on the passband frequency information, selects, from a data transmit link, a high-pass filter and/or a low-pass filter corresponding to the passband frequency information to perform filtering processing, and selects, from a data receive link, a high-pass filter and/or a low-pass filter corresponding to the passband frequency information to perform filtering processing.

It should be noted that in this embodiment, the low-pass filter is configured to filter out a signal with a frequency greater than a specified passband frequency, and the high-pass filter is configured to filter out a signal with a frequency less than a specified passband frequency. Specifically, the passband frequency information includes a first passband frequency, a second passband frequency, and a third passband frequency. A start frequency of a spectrum corresponding to a low communication rate in the first asymmetric rate transmission capability is 0, and an end frequency is the first passband frequency. A start frequency of a spectrum corresponding to a high communication rate in the first asymmetric rate transmission capability is the second passband frequency, and an end frequency is the third passband frequency.

That the first device determines the passband frequency information corresponding to the first asymmetric rate transmission capability may be specifically as follows:
S1031: The first device determines, based on a prestored correspondence between an asymmetric rate transmission capability and the passband frequency information, the passband frequency information corresponding to the first asymmetric rate transmission capability.

Specifically, the first device prestores the correspondence between the asymmetric rate transmission capability supported by the first device and the passband frequency information. After the first device determines the first asymmetric rate transmission capability in step S102, the first device may determine, based on the prestored correspondence between the asymmetric rate transmission capability and the passband frequency information, the passband frequency information corresponding to the first asymmetric rate transmission capability. The passband frequency information includes the first passband frequency, the second passband frequency, and the third passband frequency. FIG. 5 is a schematic diagram of spectrum distribution of a low communication rate and a high communication rate in the first asymmetric rate transmission capability. As shown in FIG. 5, a start frequency of a spectrum corresponding to a low communication rate is 0, and an end frequency is the first passband frequency f2; and a start frequency of a spectrum corresponding to a high communication rate is the second passband frequency f5, and an end frequency is the third passband frequency f1. A specific frequency difference exists between f2 and f5. The frequency difference is caused by a transition bandwidth between the low-pass filter in the low-rate direction and the high-pass filter at the receive end in the high-rate direction. It may be understood that the first passband frequency f2, the second passband frequency f5, and the third passband frequency f1 included in the passband frequency information are determined based on the first asymmetric rate transmission capability, and are variable. The first asymmetric rate transmission capability is determined by the first device based on the asymmetric rate transmission capability information supported by the first device, the asymmetric rate transmission capability information supported by the second device, the first communication rate of the first device, and the second communication rate of the second device. The first communication rate and the second communication rate are variable. Therefore, the communication method provided in this application may implement asymmetric rate transmission at a plurality of rates between the first device and the second device.

In this embodiment, a high-pass filter bank with a plurality of passband frequencies and a low-pass filter bank with a plurality of passband frequencies are disposed on the data transmit link and the data receive link between the first device and the second device in advance. Different passband frequency information corresponds to different high-pass filters and different low-pass filters. The high-pass filter and the low-pass filter on the corresponding data transmit link and the high-pass filter and the low-pass filter on the data receive link may be determined based on the passband frequency information. Specifically, the data transmit link of the first device includes a first low-pass filter and a first high-pass filter, and the data receive link of the first device includes a second low-pass filter and a second high-pass filter. That based on the passband frequency information, the first device selects, from the data transmit link, the high-pass filter and/or the low-pass filter corresponding to the passband frequency information to perform filtering processing, and selects, from the data receive link, the high-pass filter and/or the low-pass filter corresponding to the passband frequency information to perform filtering processing may be specifically as follows:
If the first communication rate is less than the second communication rate, the first device performs filtering processing on the data transmit link by using the first low-pass filter. A passband frequency of the first low-pass filter is the first passband frequency. The first device performs filtering processing on the data receive link by using the second high-pass filter. A passband frequency of the second high-pass filter is the second passband frequency.

If the first communication rate is greater than the second communication rate, the first device performs filtering processing on the data transmit link by using the first low-pass filter and the first high-pass filter. A passband frequency of the first low-pass filter is the third passband frequency. A passband frequency of the first high-pass filter is the second passband frequency. The first device performs filtering processing on the data receive link by using the second low-pass filter. A passband frequency of the second low-pass filter is the first passband frequency.

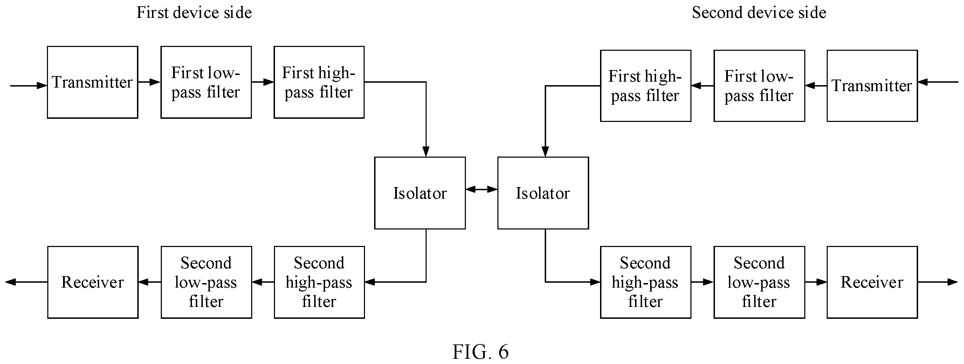

The following describes the foregoing filtering processing process with reference to FIG. 6 and FIG. 5.

FIG. 6 is a schematic diagram of a physical-layer signal processing process. As shown in FIG. 6, the first device side and the second device side each have a transmit link and a receive link. The data transmit link of the first device includes the first low-pass filter and the first high-pass filter, and the data receive link of the first device includes the second low-pass filter and the second high-pass filter. Similarly, the data transmit link of the second device includes the first low-pass filter and the first high-pass filter, and the data receive link of the second device includes the second low-pass filter and the second high-pass filter. Processing processes at two ends of a link are similar. If the first communication rate is less than the second communication rate, the first device sends a low-rate signal at the receive end of the first device. A high-frequency signal (an interference signal) is filtered out from the low-rate signal by using the first low-pass filter (the passband frequency is the first passband frequency f2). In this case, the first high-pass filter on the transmit link may be bypassed. In other words, the signal is transmitted to the second device by using an isolator instead of the first high-pass filter.

The second device sends a high-rate signal at the transmit end of the second device. A high-frequency signal (an interference signal) is filtered out from the high-rate signal by using the first low-pass filter (a passband frequency is the third passband frequency f1). Then the processed signal enters the first high-pass filter (a passband frequency is the second passband frequency f5). The first high-pass filter filters out a low-frequency signal with a frequency overlapping a frequency of the low-rate signal, to implement frequency separation between the high-rate signal and the low-rate signal.

The receive end of the first device receives a high-rate signal. The high-rate signal first passes through an isolator. A part of a low-rate signal sent by the first device is coupled to the receive end by using the isolator. After the received high-rate signal and the transmitted low-rate signal that are mixed pass through the second high-pass filter (a passband frequency is the second passband frequency f5), the transmitted low-rate signal is filtered out, and the low-frequency signal is also filtered out from the high-rate signal. In this case, a start frequency of the received high-rate signal is f5, and an end frequency is f1. After the foregoing processing, the high-rate signal and the low-rate signal at the receive end of the first device are separated on a spectrum. EC processing does not need to be performed at the receive end of the first device.

The receive end of the second device receives a low-rate signal. The low-rate signal first passes through an isolator. A part of a high-rate signal sent by the second device is coupled to the receive end by using the isolator. Then the second high-pass filter (a bandpass frequency is the second bandpass frequency f5) is connected. The high-rate signal and the low-rate signal that are mixed pass through the second low-pass filter (a passband frequency is the first passband frequency f2), and the high-rate signal is filtered out. In this case, a start frequency of the received low-rate signal is 0, and an end frequency is f2. After the foregoing processing, the high-rate signal and the low-rate signal at the receive end of the second device are separated on a spectrum. EC processing does not need to be performed at the receive end of the second device.

In the foregoing processing process, the high-rate signal is basically decoupled from the low-rate signal. Therefore, EC may not be enabled at two ends of the first device and the second device. In addition, two-way signal processing does not need to implement demodulation through frequency modulation, especially for a high-rate signal. The method in this embodiment is applicable to a scenario in which a difference between rates of two-way signals is relatively large. For example, a ratio of the rates of the two-way signals is greater than or equal to 100:1. For example, a rate in the high-rate direction is 10 Gbps, and a rate in the low-rate direction is 100/10 Mbps. For another example, a rate in the high-rate direction is 1 Gbps, and a rate in the low-rate direction is 10 Mbps.

It may be understood that, to ensure universality, one device supports high and low rates in both two directions. In another scenario, the first device may send the high-rate signal, and the second device may send the low-rate signal. In other words, when the high and low rates in the two directions are exchanged, in this case, receiving the low-rate signal is changed to receiving the high-rate signal. The foregoing processing process at the transmit end and the receive end of the first device is a processing process at the transmit end and the receive end of the second device. The foregoing processing process at the transmit end and the receive end of the second device is a processing process at the transmit end and the receive end of the first device.

It may be understood that if the first device or the second device supports only one asymmetric rate transmission capability, only one group of a high-pass filter and a low-pass filter needs to be disposed for the first device or the second device. In other words, the transmit link includes one high-pass filter and one low-pass filter, and the receive link includes one high-pass filter and one low-pass filter. Complexity of hardware settings can be reduced.

In an implementable manner, to further improve a transmit rate in an asymmetric rate direction, when a system signal-to-noise margin (SNR margin, SNRM) condition is met, a baud rate of a PAM symbol may be reduced through increasing a modulation order of pulse amplitude modulation (pulse amplitude modulation, PAM), to reduce a frequency of a signal in the low-rate direction, thereby improving a maximum transmit rate in the low-rate direction. For example, the ratio of the rates of the two-way signals may be greater than or equal to 100:2.

Further, in the method of this embodiment, before the first device determines the passband frequency information corresponding to the first asymmetric rate transmission capability, the method may further include: The first device performs link training with the second device, where the link training includes channel equalization coefficient training. In the method provided in this application, EC processing does not need to be performed at the receive end. Therefore, EC coefficient training does not need to be performed in a link training phase, and only channel equalization coefficient training needs to be performed, to simplify a link training process and shorten a processing time of the link training.

Further, based on the foregoing embodiment, in the method of this embodiment, after the first device determines the first asymmetric rate transmission capability, before the first device determines the passband frequency information corresponding to the first asymmetric rate transmission capability, the method may further include: The first device sends the first asymmetric rate transmission capability to the second device. The first device receivessecond asymmetric rate transmission capability information sent by the second device, and determines that the first asymmetric rate transmission capability is the same as the second asymmetric rate transmission capability information. It may be understood that, in the auto-negotiation phase, both the first device and the second device perform the foregoing process in step S102 to determine the asymmetric rate transmission capability supported by both the first device and the second device, and then send the asymmetric rate transmission capability to each other for confirmation. The first device on one side is used as an example. The first device receives the second asymmetric rate transmission capability information sent by the second device. The second asymmetric rate transmission capability information is the asymmetric rate transmission capability that is supported by both the first device and the second device and that is determined by the second device based on the asymmetric rate transmission capability information supported by the first device, the asymmetric rate transmission capability information supported by the second device, the first communication rate of the first device, and the second communication rate of the second device. When the first device determines that the first asymmetric rate transmission capability is the same as the second asymmetric rate transmission capability information, the first device performs data transmission with the second device based on the first asymmetric rate transmission capability, to improve accuracy of data transmission.

In the communication method provided in this embodiment, asymmetric rate transmission at a plurality of rates may be implemented between the first device and the second device. In addition, this is compatible with the symmetric rate transmission. When the symmetric rate transmission is compatible, before step S101, the method in this embodiment may further include: The first device receives the second communication rate sent by the second device. The first device determines that the first communication rate is different from the second communication rate. Through determining that the first device and the second device have different communication rates, it may be determined that asymmetric rate transmission is implemented between the first device and the second device. Correspondingly, the processing process of steps S101 to S103 is performed. If it is determined that the first communication rate is the same as the second communication rate, it may be determined that symmetric rate transmission is implemented between the first device and the second device. The symmetric rate transmission process is performed. Specifically, the first device performs link training with the second device. The link training includes channel equalization coefficient training and echo cancellation coefficient training. Then the first device performs data transmission with the second device based on a symmetric rate transmission capability supported by the first device and the second device. EC processing is performed at the receive end. A processing process of the second device is similar. EC processing also needs to be performed at the receive end.

In the communication method provided in this embodiment, the first device obtains the communication rate of the second device and the asymmetric rate transmission capability information supported by the second device. Then the first device determines, based on the asymmetric rate transmission capability information supported by the first device, the asymmetric rate transmission capability information supported by the second device, the first communication rate of the first device, and the second communication rate, the first asymmetric rate transmission capability supported by both the first device and the second device. The first device determines the passband frequency information corresponding to the first asymmetric rate transmission capability; and based on the passband frequency information, selects, from the data transmit link, the high-pass filter and/or the low-pass filter corresponding to the passband frequency information to perform filtering processing, and selects, from the data receive link, the high-pass filter and/or the low-pass filter corresponding to the passband frequency information to perform filtering processing. Therefore, a high-rate signal and a low-rate signal at the receive end are separated on a spectrum, so that EC cancellation does not need to be performed at the receive end, thereby reducing power consumption.

The following describes the technical solution shown in FIG. 4 in detail with reference to several specific embodiments.

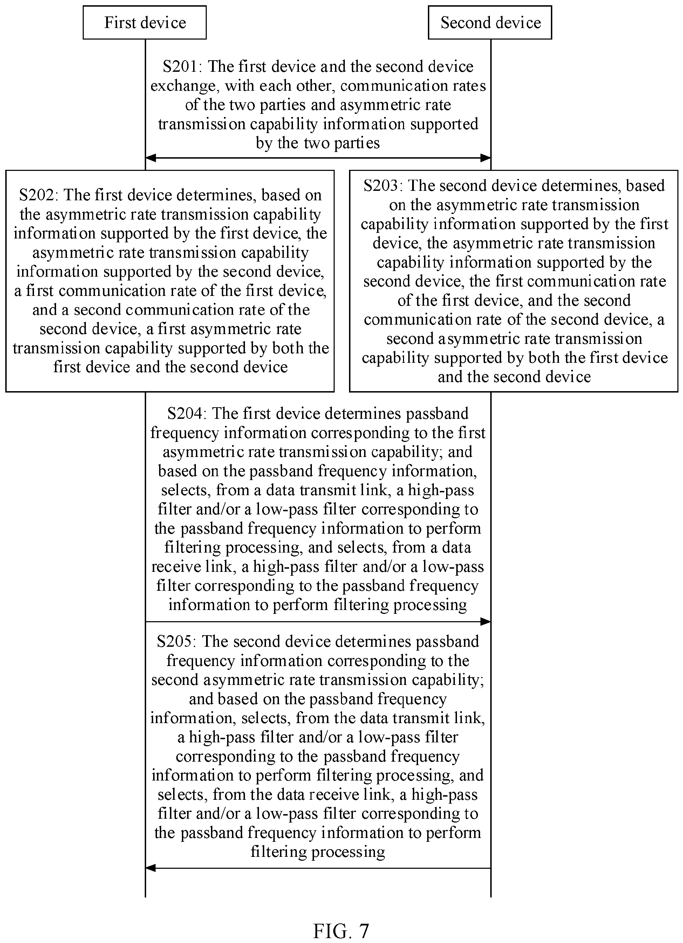

FIG. 7 is a flowchart of an interaction in an embodiment of a communication method according to this application. As shown in FIG. 7, in this embodiment, a first device or a second device may be a device such as an in-vehicle gateway, or may be an in-vehicle/out-of-vehicle component, or the like. In this embodiment, two ends of a communication link support only asymmetric rate transmission, a supported low communication rate is, for example, 10 Mbps, and a supported high communication rate is 10 Gbps. FIG. 6 is a schematic diagram of a physical link processing process corresponding to the communication method in this embodiment. A left side in FIG. 6 is the first device, and a right side is the second device. A direction in which the first device performs data transmission with the second device is a low-rate transmission direction, and a direction in which the second device performs data transmission with the first device is a high-rate transmission direction. With reference to FIG. 6 and FIG. 7, the method in this embodiment may include the following steps:
S201: The first device and the second device exchange, with each other, communication rates of the two parties and asymmetric rate transmission capability information supported by the two parties.

The asymmetric rate transmission capability information includes at least one asymmetric transmission capability. After a communication link is powered on, devices at two ends of the link enter an auto-negotiation phase. In the auto-negotiation phase, the first device and the second device may exchange the communication rates and the asymmetric rate transmission capability information of the two parties with each other. The exchange of the asymmetric rate transmission capability information may be that the first device receives indication information sent by the second device. The indication information is used to indicate the asymmetric rate transmission capability information supported by the second device. The indication information may be specifically indicated by using a bit in a technical capability field in a link codeword basic page. Similarly, the second device receives indication information sent by the first device. The indication information is used to indicate the asymmetric rate transmission capability information supported by the first device. In this embodiment, the asymmetric rate transmission capability information supported by the first device is, for example, the asymmetric rate transmission capability information shown in Table 3, and the asymmetric rate transmission capability information supported by the second device is, for example, the asymmetric rate transmission capability information shown in Table 4.

**Table 3: Asymmetric rate transmission capability information supported by the first device**

| Bit (bit) in a technical capability field | Capability description |
|---|---|
| A0 | An asymmetric rate transmission capabilityis downlink 1000 Mbps and 10 Mbps |
| A1 | An asymmetric rate transmission capabilityis downlink 10 Gbps and 10 Mbps |
| A2-A26 | Reserved |

**Table 4: Asymmetric rate transmission capability information supported by the second device**

| Bit (bit) in a technical capability field | Capability description |
|---|---|
| A0 | An asymmetric rate transmission capabilityis downlink 1000 Mbps and 10 Mbps |
| A1 | An asymmetric rate transmission capabilityis uplink 1000 Mbps and 10 Mbps |
| A2 | An asymmetric rate transmission capabilityis downlink 10 Gbps and 10 Mbps |
| A3 | An asymmetric rate transmission capabilityis uplink 10 Gbps and 10 Mbps |
| A4-A26 | Reserved |

S202: The first device determines, based on the asymmetric rate transmission capability information supported by the first device, the asymmetric rate transmission capability information supported by the second device, the first communication rate of the first device, and the second communication rate of the second device, a first asymmetric rate transmission capability supported by both the first device and the second device.

Specifically, in this embodiment, the first communication rate is 10 Mbps, and the second communication rate is 10 Gbps. According to a priority parsing rule, the first device may first prioritize, based on the first communication rate and the second communication rate, the asymmetric rate transmission capability information supported by the first device. A specific prioritizing rule may be the rule in step S1021'. The asymmetric rate transmission capability information in a first order is obtained as follows:
1. downlink 10 Gbps and 10 Mbps, that is, when a transmission direction from the first device to the second device is a downlink transmission direction, supported communication rates at two ends are 10 Gbps and 10 Mbps; and
2. downlink 1000 Mbps and 10 Mbps, that is, when a transmission direction from the first device to the second device is a downlink transmission direction, supported communication rates at two ends are 1000 Mbps and 10 Mbps.

Then the first device prioritizes, based on the first communication rate and the second communication rate, the asymmetric rate transmission capability information supported by the second device, to obtain the asymmetric rate transmission capability information in a second order. A specific prioritizing rule may be the rule in step S1021'. The asymmetric rate transmission capability information in a second order is specifically as follows:
1. uplink 10 Gbps and 10 Mbps, that is, when a transmission direction from the second device to the first device is an uplink transmission direction, supported communication rates at two ends are 10 Gbps and 10 Mbps;
2. uplink 1000 Mbps and 10 Mbps, that is, when a transmission direction from the second device to the first device is an uplink transmission direction, supported communication rates at two ends are 1000 Mbps and 10 Mbps;
3. downlink 10 Gbps and 10 Mbps, that is, when a transmission direction from the second device to the first device is a downlink transmission direction, supported communication rates at two ends are 10 Gbps and 10 Mbps; and
4. downlink 1000 Mbps and 10 Mbps, that is, when a transmission direction from the second device to the first device is a downlink transmission direction, supported communication rates at two ends are 1000 Mbps and 10 Mbps.

Then the first device determines, based on the asymmetric rate transmission capability information in the first order and the asymmetric rate transmission capability information in the second order, the first asymmetric rate transmission capability supported by both the first device and the second device, that is, 10 Gbps and 10 Mbps. In addition, the transmission direction from the first device to the second device is the downlink transmission direction.

S203: The second device determines, based on the asymmetric rate transmission capability information supported by the first device, the asymmetric rate transmission capability information supported by the second device, the first communication rate of the first device, and the second communication rate of the second device, a second asymmetric rate transmission capability supported by both the first device and the second device.

Optionally, the method may further include: The first device sends the first asymmetric rate transmission capability to the second device. The first device receives the second asymmetric rate transmission capability information sent by the second device, determines that the first asymmetric rate transmission capability is the same as the second asymmetric rate transmission capability information, and then continues to perform step S204. The second device performs the same confirmation process. It may be understood that, in the auto-negotiation phase, both the first device and the second device perform the foregoing process to determine the asymmetric rate transmission capability supported by both the first device and the second device, and then send the asymmetric rate transmission capability to each other for confirmation.

S204: The first device determines passband frequency information corresponding to the first asymmetric rate transmission capability; and based on the passband frequency information, selects, from a data transmit link, a high-pass filter and/or a low-pass filter corresponding to the passband frequency information to perform filtering processing, and selects, from a data receive link, a high-pass filter and/or a low-pass filter corresponding to the passband frequency information to perform filtering processing.

Specifically, with reference to 6, a data transmit link of the first device includes a first low-pass filter and a first high-pass filter, and a data receive link of the first device includes a second low-pass filter and a second high-pass filter. In this embodiment, the first communication rate is less than the second communication rate. The first device sends a low-rate signal at a transmit end of the first device. The low-rate signal first passes through the first low-pass filter (a passband frequency is a first passband frequency f2) to filter out a high-frequency signal (an interference signal). In this case, the first high-pass filter on the transmit link may be bypassed. In other words, the signal is transmitted to the second device by using an isolator instead of the first high-pass filter.

The receive end of the first device receives a high-rate signal. The high-rate signal first passes through an isolator. A part of a low-rate signal sent by the first device is coupled to the receive end by using the isolator. After the received high-rate signal and the transmitted low-rate signal that are mixed pass through the second high-pass filter (a passband frequency is a second passband frequency f5), the transmitted low-rate signal is filtered out, and the low-frequency signal is also filtered out from the high-rate signal. In this case, a start frequency of the received high-rate signal is f5, and an end frequency is f1. After the foregoing processing, the high-rate signal and the low-rate signal at the receive end of the first device are separated on a spectrum. EC processing does not need to be performed at the receive end of the first device.

S205: The second device determines passband frequency information corresponding to the second asymmetric rate transmission capability; and based on the passband frequency information, selects, from a data transmit link, a high-pass filter and/or a low-pass filter corresponding to the passband frequency information to perform filtering processing, and selects, from a data receive link, a high-pass filter and/or a low-pass filter corresponding to the passband frequency information to perform filtering processing.

It may be understood that the first asymmetric rate transmission capability is the same as the second asymmetric rate transmission capability. Specifically, with reference to 6, a data transmit link of the second device includes a first low-pass filter and a first high-pass filter, and a data receive link of the second device includes a second low-pass filter and a second high-pass filter. In this embodiment, the second communication rate is greater than the first communication rate. The second device sends a high-rate signal at a transmit end of the second device. The high-rate signal first passes through the first low-pass filter (a passband frequency is a third passband frequency f1) to filter out a high-frequency signal (an interference signal). Then the processed signal enters the first high-pass filter (a passband frequency is a second passband frequency f5). The first high-pass filter filters out a low-frequency signal with a frequency overlapping a frequency of a low-rate signal, to implement frequency separation between the high-rate signal and the low-rate signal.

The receive end of the second device receives a low-rate signal. The low-rate signal first passes through an isolator. A part of a high-rate signal sent by the second device is coupled to the receive end by using the isolator. Then the second high-pass filter (a bandpass frequency is a second bandpass frequency f5) is connected. The high-rate signal and the low-rate signal that are mixed pass through the second low-pass filter (a passband frequency is the first passband frequency f2), and the high-rate signal is filtered out. In this case, a start frequency of the received low-rate signal is 0, and an end frequency is f2. After the foregoing processing, the high-rate signal and the low-rate signal at the receive end of the second device are separated on a spectrum. EC processing does not need to be performed at the receive end of the second device.

In the foregoing processing process, asymmetric rate transmission is implemented between the first device and the second device, and the high-rate signal and the low-rate signal at the receive end are separated on a spectrum. Therefore, EC cancellation does not need to be performed at the receive end, thereby reducing power consumption.

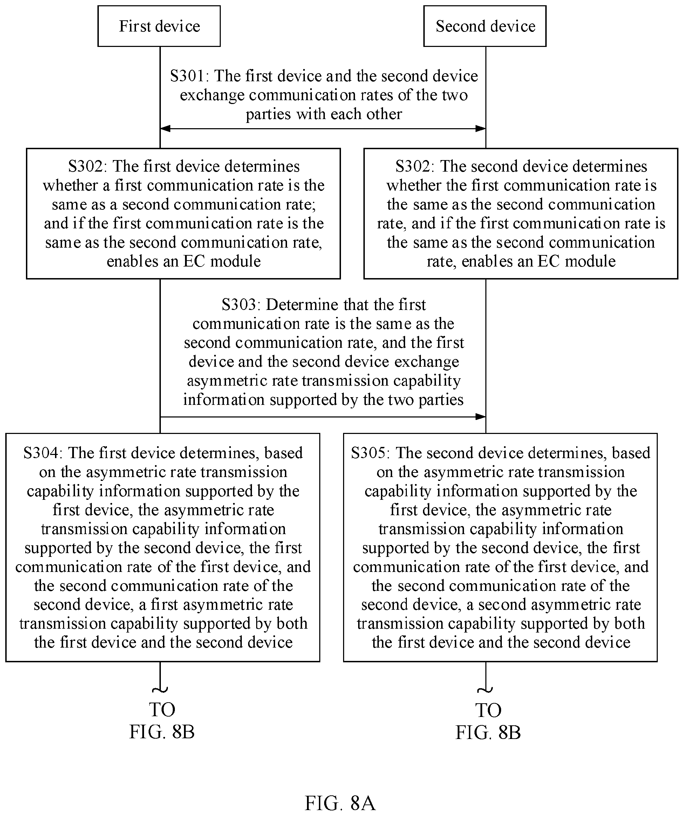

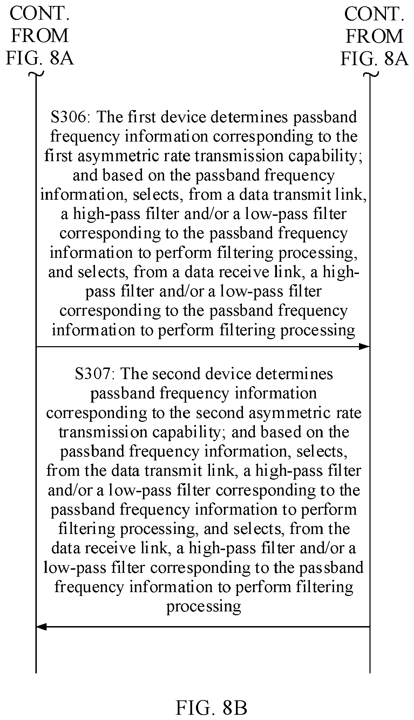

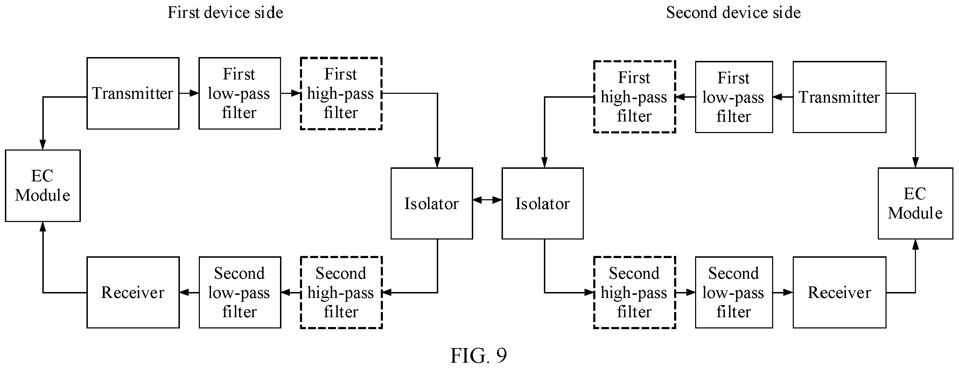

FIG. 8A and FIG. 8B is a flowchart of an interaction in an embodiment of a communication method according to this application. As shown in FIG. 8A and FIG. 8B, in this embodiment, a first device or a second device may be a device such as an in-vehicle gateway, or may be an in-vehicle/out-of-vehicle component, or the like. In this embodiment, two ends of a communication link support both asymmetric rate transmission and symmetric rate transmission, a supported low communication rate is, for example, 10 Mbps, and a supported high communication rate is 10 Gbps. FIG. 9 is a schematic diagram of a physical link processing process corresponding to the communication method in the embodiment shown in FIG. 8A and FIG. 8B. A left side in FIG. 8A and FIG. 8B is the first device, and a right side is the second device. A direction in which the first device performs data transmission with the second device is a low-rate transmission direction, and a direction in which the second device performs data transmission with the first device is a high-rate transmission direction. With reference to FIG. 8A and FIG. 8B and FIG. 9, the method in this embodiment may include the following steps:
S301: The first device and the second device exchange communication rates of the two parties with each other.

Specifically, the first device sends the first communication rate of the first device to the second device, and the second device sends the second communication rate of the second device to the first device.

S302: The first device determines whether the first communication rate is the same as the second communication rate; and if the first communication rate is the same as the second communication rate, enables an EC module, or if the first communication rate is different from the second communication rate, performs step S303.

Specifically, if it is determined that the first communication rate is the same as the second communication rate, symmetric rate transmission is implemented between the first device and the second device. The EC module is enabled in the symmetric rate transmission. In a duplex communication mode, each end of a communication link may send data to a peer end and receive data from the peer end at the same time. EC processing is performed at the receive end to cancel a transmitted signal from a received signal. It should be noted that, when symmetric rate transmission is performed, a first high-pass filter and a second high-pass filter on the first device side shown in FIG. 8A and FIG. 8B and a first high-pass filter and a second high-pass filter on the second device side are not needed and may be bypassed.

Similarly, the second device determines whether the first communication rate is the same as the second communication rate; and if the first communication rate is the same as the second communication rate, enables an EC module, or if the first communication rate is different from the second communication rate, performs step S303. A process of performing symmetric rate transmission is similar. Details are not described herein again.

S303: The first device and the second device exchange, with each other, asymmetric rate transmission capability information supported by the two parties.

The asymmetric rate transmission capability information includes at least one asymmetric transmission capability. After a communication link is powered on, devices at two ends of the link enter an auto-negotiation phase. In the auto-negotiation phase, the first device and the second device may exchange the communication rates and the asymmetric rate transmission capability information of the two parties with each other. The exchange of the asymmetric rate transmission capability information may be that the first device receives indication information sent by the second device. The indication information is used to indicate the asymmetric rate transmission capability information supported by the second device. The indication information may be specifically indicated by using a bit in a technical capability field in a link codeword basic page. Similarly, the second device receives indication information sent by the first device. The indication information is used to indicate the asymmetric rate transmission capability information supported by the first device. In this embodiment, the asymmetric rate transmission capability information supported by the first device is, for example, the asymmetric rate transmission capability information shown in Table 5, and the asymmetric rate transmission capability information supported by the second device is, for example, the asymmetric rate transmission capability information shown in Table 6.

**Table 5: Asymmetric rate transmission capability information supported by the first device**

| Bit (bit) in a technical capability field | Capability description |
|---|---|
| A0 | A symmetric transmission capability is 1000 Mbps |
| A1 | An asymmetric rate transmission capabilityis 1000 Mbps and 10 Mbps |
| A2 | A symmetric transmission capability is 10 Gbps |
| A3 | An asymmetric rate transmission capabilityis 10 Gbps and 10 Mbps |
| A4-A26 | Reserved |

**Table 6: Asymmetric rate transmission capability information supported by the second device**

| Bit (bit) in a technical capability field | Capability description |
|---|---|
| A0 | A symmetric transmission capability is 1000 Mbps |
| A1 | An asymmetric rate transmission capabilityis downlink 1000 Mbps and 10 Mbps |
| A2 | An asymmetric rate transmission capabilityis uplink 1000 Mbps and 10 Mbps |
| A3 | A symmetric transmission capability is 10 Gbps |
| A4 | An asymmetric rate transmission capabilityis downlink 10 Gbps and 10 Mbps |
| A5 | An asymmetric rate transmission capabilityis uplink 10 Gbps and 10 Mbps |
| A6-A26 | Reserved |

S304: The first device determines, based on the asymmetric rate transmission capability information supported by the first device, the asymmetric rate transmission capability information supported by the second device, the first communication rate of the first device, and the second communication rate of the second device, a first asymmetric rate transmission capability supported by both the first device and the second device.

Specifically, in this embodiment, the first communication rate is 10 Mbps, and the second communication rate is 10 Gbps. According to a priority parsing rule, if symmetric rate transmission and asymmetric rate transmission are both supported, when it is determined that transmission is asymmetric rate transmission, asymmetric rate transmission has a higher priority. The first device may first prioritize, based on the first communication rate and the second communication rate, the asymmetric rate transmission capability information supported by the first device. A specific prioritizing rule may be the rule described in step S1021'. Then after a symmetric transmission capability is placed after the prioritized asymmetric rate transmission capability information, the obtained asymmetric rate transmission capability information in a first order is as follows:
1. an asymmetric rate transmission capabilityis 10 Gbps and 10 Mbps;
2. an asymmetric rate transmission capabilityis 1000 Mbps and 10 Mbps;
3. a symmetric transmission capability is 10 Gbps; and
4. a symmetric transmission capability is 1000 Mbps.

Then the first device prioritizes, based on the first communication rate and the second communication rate, the asymmetric rate transmission capability information supported by the second device. A specific prioritizing rule may be the rule in step S1021'. The symmetric transmission capability is placed after the prioritized asymmetric rate transmission capability information, to obtain the asymmetric rate transmission capability information in a second order:
1. an asymmetric rate transmission capabilityis uplink 10 Gbps and 10 Mbps, that is, when a transmission direction from the second device to the first device is an uplink transmission direction, supported communication rates at two ends are 10 Gbps and 10 Mbps;
2. an asymmetric rate transmission capabilityis uplink 1000 Mbps and 10 Mbps, that is, when a transmission direction from the second device to the first device is an uplink transmission direction, supported communication rates at two ends are 1000 Mbps and 10 Mbps;
3. an asymmetric rate transmission capabilityis downlink 10 Gbps and 10 Mbps, that is, when a transmission direction from the second device to the first device is a downlink transmission direction, supported communication rates at two ends are 10 Gbps and 10 Mbps;
4. an asymmetric rate transmission capabilityis downlink 1000 Mbps and 10 Mbps, that is, when a transmission direction from the second device to the first device is a downlink transmission direction, supported communication rates at two ends are 1000 Mbps and 10 Mbps;
5. a symmetric transmission capability is 10 Gbps; and
6. a symmetric transmission capability is 1000 Mbps.

Then the first device determines, based on the asymmetric rate transmission capability information in the first order and the asymmetric rate transmission capability information in the second order, the first asymmetric rate transmission capability supported by both the first device and the second device, that is, 10 Gbps and 10 Mbps. In addition, the transmission direction from the first device to the second device is the downlink transmission direction.

S305: The second device determines, based on the asymmetric rate transmission capability information supported by the first device, the asymmetric rate transmission capability information supported by the second device, the first communication rate of the first device, and the second communication rate of the second device, a second asymmetric rate transmission capability supported by both the first device and the second device.

Optionally, the method may further include: The first device sends the first asymmetric rate transmission capability to the second device. The first device receives the second asymmetric rate transmission capability information sent by the second device, determines that the first asymmetric rate transmission capability is the same as the second asymmetric rate transmission capability information, and then continues to perform step S305. The second device performs the same confirmation process. It may be understood that, in the auto-negotiation phase, both the first device and the second device perform the foregoing process to determine an asymmetric rate transmission capability supported by both the first device and the second device, and then send the asymmetric rate transmission capability to each other for confirmation.

Steps S306 and S307 are the same as steps S204 and S205 shown in FIG. 7. Details are not described herein again.

In the foregoing processing process, asymmetric rate transmission is implemented between the first device and the second device, and a high-rate signal and a low-rate signal at the receive end are separated on a spectrum. Therefore, EC cancellation does not need to be performed at the receive end, thereby reducing power consumption. In addition, symmetric rate transmission is also compatible.

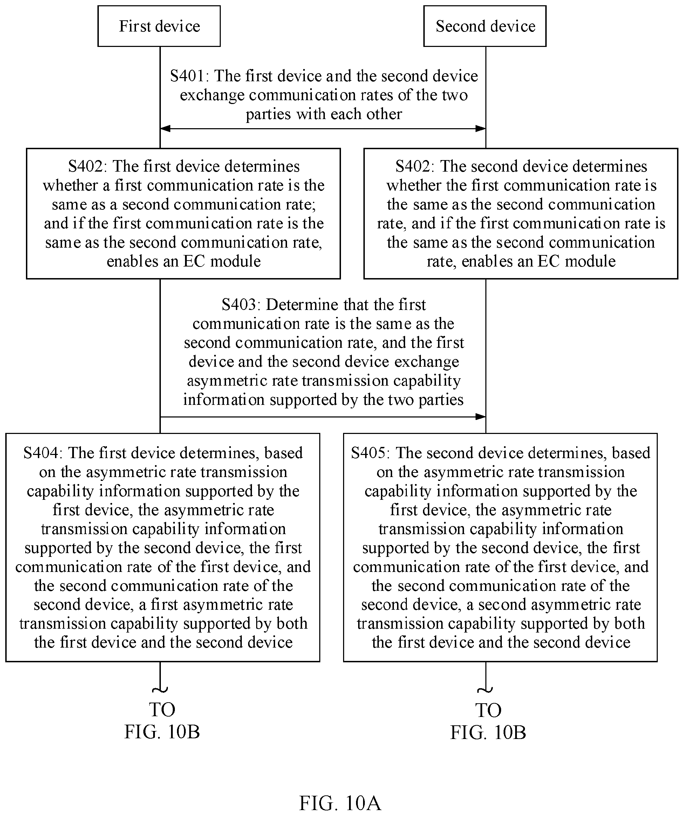

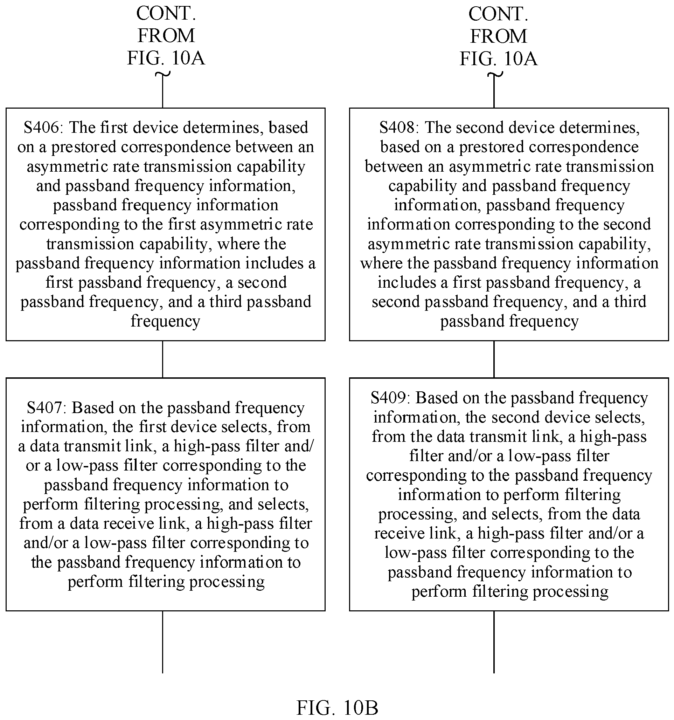

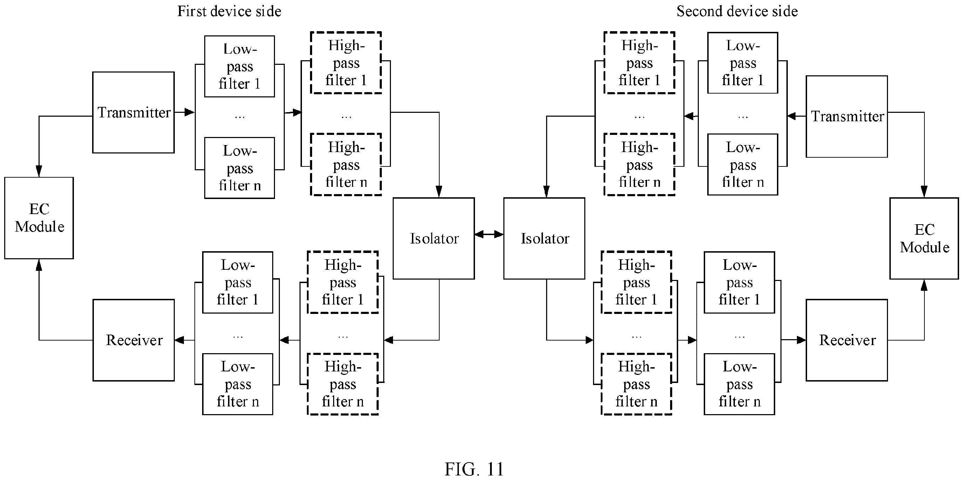

FIG. 10A and FIG. 10B is a flowchart of an interaction in an embodiment of a communication method according to this application. As shown in FIG. 10A and FIG. 10B, in this embodiment, a first device or a second device may be a device such as an in-vehicle gateway, or may be an in-vehicle/out-of-vehicle component, or the like. In this embodiment, two ends of a communication link support both asymmetric rate transmission and symmetric rate transmission, and there may be a plurality of supported communication rates at two ends, for example, a low communication rate of 100 Mbps or 10 Mbps and a high communication rate of 10 Gbps. FIG. 11 is a schematic diagram of a physical link processing process corresponding to the communication method in the embodiment shown in FIG. 9. A left side in FIG. 11 is the first device, and a right side is the second device. A direction in which the first device performs data transmission with the second device is a low-rate transmission direction, and a direction in which the second device performs data transmission with the first device is a high-rate transmission direction. With reference to FIG. 10A and FIG. 10B and FIG. 11, the method in this embodiment may include the following steps:
S401: The first device and the second device exchange communication rates of the two parties with each other.

Specifically, the first device sends the first communication rate of the first device to the second device, and the second device sends the second communication rate of the second device to the first device.

S402: The first device determines whether the first communication rate is the same as the second communication rate; and if the first communication rate is the same as the second communication rate, enables an EC module, or if the first communication rate is different from the second communication rate, performs step S403.

Specifically, if it is determined that the first communication rate is the same as the second communication rate, symmetric rate transmission is implemented between the first device and the second device. The EC module is enabled in the symmetric rate transmission. In a duplex communication mode, each end of a communication link may send data to a peer end and receive data from the peer end at the same time. EC processing is performed at the receive end to cancel a transmitted signal from a received signal.

Similarly, the second device determines whether the first communication rate is the same as the second communication rate; and if the first communication rate is the same as the second communication rate, enables an EC module, or if the first communication rate is different from the second communication rate, performs step S403. A process of performing symmetric rate transmission is similar. Details are not described herein again. It should be noted that, when symmetric rate transmission is performed, a first high-pass filter bank and a second high-pass filter bank on the first device side shown in FIG. 11 and a first high-pass filter bank and a second high-pass filter bank on the second device side are not needed and may be bypassed.

S403: The first device and the second device exchange, with each other, asymmetric rate transmission capability information supported by the two parties.

The asymmetric rate transmission capability information includes at least one asymmetric transmission capability. After the communication link is powered on, devices at two ends of the link enter an auto-negotiation phase. In the auto-negotiation phase, the first device and the second device may exchange the communication rates and the asymmetric rate transmission capability information of the two parties with each other. The exchange of the asymmetric rate transmission capability information may be that the first device receives indication information sent by the second device. The indication information is used to indicate the asymmetric rate transmission capability information supported by the second device. The indication information may be specifically indicated by using a bit in a technical capability field in a link codeword basic page. Similarly, the second device receives indication information sent by the first device. The indication information is used to indicate the asymmetric rate transmission capability information supported by the first device. In this embodiment, the asymmetric rate transmission capability information supported by the first device is, for example, the asymmetric rate transmission capability information shown in Table 7, and the asymmetric rate transmission capability information supported by the second device is, for example, the asymmetric rate transmission capability information shown in Table 8.

**Table 7: Asymmetric rate transmission capability information supported by the first device**

| Bit (bit) in a technical capability field | Capability description |
|---|---|
| A0 | A symmetric transmission capability is 1000 Mbps |
| A1 | An asymmetric rate transmission capabilityis 1000 Mbps and 10 Mbps |
| A2 | A symmetric transmission capability is 10 Gbps |
| A3 | An asymmetric rate transmission capabilityis 10 Gbps and 10 Mbps |
| A4 | An asymmetric rate transmission capabilityis 10 Gbps and 100 Mbps |
| A5-A26 | Reserved |

**Table 8: Asymmetric rate transmission capability information supported by the second device**

| Bit (bit) in a technical capability field | Capability description |
|---|---|
| A0 | A symmetric transmission capability is 1000 Mbps |
| A1 | An asymmetric rate transmission capabilityis downlink 1000 Mbps and 10 Mbps |
| A2 | An asymmetric rate transmission capabilityis uplink 1000 Mbps and 10 Mbps |
| A3 | A symmetric transmission capability is 10 Gbps |
| A4 | An asymmetric rate transmission capabilityis downlink 10 Gbps and 100 Mbps |
| A5 | An asymmetric rate transmission capabilityis uplink 10 Gbps and 100 Mbps |
| A6 | An asymmetric rate transmission capabilityis downlink 10 Gbps and 10 Mbps |
| A7 | An asymmetric rate transmission capabilityis uplink 10 Gbps and 10 Mbps |
| A8-A26 | Reserved |

S404: The first device determines, based on the asymmetric rate transmission capability information supported by the first device, the asymmetric rate transmission capability information supported by the second device, the first communication rate of the first device, and the second communication rate of the second device, a first asymmetric rate transmission capability supported by both the first device and the second device.

Specifically, in this embodiment, the first communication rate is 10 Mbps, and the second communication rate is 10 Gbps. According to a priority parsing rule, if symmetric rate transmission and asymmetric rate transmission are both supported, when it is determined that transmission is asymmetric rate transmission, asymmetric rate transmission has a higher priority. The first device may first prioritize, based on the first communication rate and the second communication rate, the asymmetric rate transmission capability information supported by the first device. A specific prioritizing rule may be the rule described in step S1021'. Then after a asymmetric rate transmission capabilityis placed after the prioritized asymmetric rate transmission capability information, the obtained asymmetric rate transmission capability information in a first order is as follows:
1. an asymmetric rate transmission capabilityis 10 Gbps and 10 Mbps;
2. an asymmetric rate transmission capabilityis 10 Gbps and 100 Mbps;
3. an asymmetric rate transmission capabilityis 1000 Mbps and 10 Mbps;
4. a symmetric transmission capability is 10 Gbps; and
5. a symmetric transmission capability is 1000 Mbps.

Then the first device prioritizes, based on the first communication rate and the second communication rate, the asymmetric rate transmission capability information supported by the second device. A specific prioritizing rule may be the rule in step S1021'. The symmetric transmission capability is placed after the prioritized asymmetric rate transmission capability information, to obtain the asymmetric rate transmission capability information in a second order:
1. an asymmetric rate transmission capabilityis uplink 10 Gbps and 10 Mbps, that is, when a transmission direction from the second device to the first device is an uplink transmission direction, supported communication rates at two ends are 10 Gbps and 10 Mbps;
2. an asymmetric rate transmission capabilityis uplink 10 Gbps and 100 Mbps, that is, when a transmission direction from the second device to the first device is an uplink transmission direction, supported communication rates at two ends are 10 Gbps and 100 Mbps;
3. an asymmetric rate transmission capability is uplink 1000 Mbps and 10 Mbps, that is, when a transmission direction from the second device to the first device is an uplink transmission direction, supported communication rates at two ends are 1000 Mbps and 10 Mbps;
4. an asymmetric rate transmission capabilityis downlink 10 Gbps and 10 Mbps, that is, when a transmission direction from the second device to the first device is a downlink transmission direction, supported communication rates at two ends are 10 Gbps and 10 Mbps;
5. an asymmetric rate transmission capabilityis downlink 10 Gbps and 100 Mbps, that is, when a transmission direction from the second device to the first device is a downlink transmission direction, supported communication rates at two ends are 10 Gbps and 100 Mbps;
6. an asymmetric rate transmission capabilityis downlink 1000 Mbps and 10 Mbps, that is, when a transmission direction from the second device to the first device is a downlink transmission direction, supported communication rates at two ends are 1000 Mbps and 10 Mbps;
7. a symmetric transmission capability is 10 Gbps; and
8. a symmetric transmission capability is 1000 Mbps.

Then the first device determines, based on the asymmetric rate transmission capability information in the first order and the asymmetric rate transmission capability information in the second order, the first asymmetric rate transmission capability supported by both the first device and the second device, that is, 10 Gbps and 10 Mbps. In addition, the transmission direction from the first device to the second device is the downlink transmission direction.

S405: The second device determines, based on the asymmetric rate transmission capability information supported by the first device, the asymmetric rate transmission capability information supported by the second device, the first communication rate of the first device, and the second communication rate of the second device, a second asymmetric rate transmission capability supported by both the first device and the second device.

A determining process of the second device is similar to a determining process of the first device. Details are not described herein again.

Optionally, the method may further include: The first device sends the first asymmetric rate transmission capability to the second device. The first device receives the second asymmetric rate transmission capability information sent by the second device, determines that the first asymmetric rate transmission capability is the same as the second asymmetric rate transmission capability information, and then continues to perform step S405. The second device performs the same confirmation process. It may be understood that, in the auto-negotiation phase, both the first device and the second device perform the foregoing process to determine the asymmetric rate transmission capability supported by both the first device and the second device, and then send the asymmetric rate transmission capability to each other for confirmation.

S406: The first device determines, based on a prestored correspondence between an asymmetric rate transmission capability and the passband frequency information, the passband frequency information corresponding to the first asymmetric rate transmission capability. The passband frequency information includes a first passband frequency, a second passband frequency, and a third passband frequency.

Specifically, with reference to FIG. 11, a transmit end of the first device includes a first low-pass filter bank and a first high-pass filter bank. The first low-pass filter bank includes n low-pass filters, and the first high-pass filter bank includes n high-pass filters. A receive end of the first device includes a second low-pass filter bank and a second high-pass filter bank. The second low-pass filter bank includes n low-pass filters, and the second high-pass filter bank includes n high-pass filters. The first device determines, based on a prestored correspondence between an asymmetric rate transmission capability and passband frequency information, passband frequency information corresponding to the first asymmetric rate transmission capability. The passband frequency information includes a first passband frequency, a second passband frequency, and a third passband frequency. A start frequency of a spectrum corresponding to a low communication rate in the first asymmetric rate transmission capability is 0, and an end frequency is the first passband frequency. A start frequency of a spectrum corresponding to a high communication rate in the first asymmetric rate transmission capability is the second passband frequency, and an end frequency is the third passband frequency. The passband frequency information is determined, so that a high-pass filter and a low-pass filter on a corresponding data transmit link and a high-pass filter and a low-pass filter on a data receive link can be determined, that is, one of the n high-pass filters in the first high-pass filter bank, and one of the n high-pass filters in the second high-pass filter bank; and one of the n low-pass filters in the first low-pass filter bank, and one of the n low-pass filters in the second low-pass filter bank.

S407: Based on the passband frequency information, the first device selects, from the data transmit link, a high-pass filter and/or a low-pass filter corresponding to the passband frequency information to perform filtering processing, and selects, from the data receive link, a high-pass filter and/or a low-pass filter corresponding to the passband frequency information to perform filtering processing.

Specifically, different passband frequency information corresponds to different high-pass filters and different low-pass filters. The high-pass filter and the low-pass filter on the corresponding data transmit link and the high-pass filter and the low-pass filter on the data receive link may be determined based on the passband frequency information. In other words, the data transmit link of the first device includes the first low-pass filter and the first high-pass filter, and the data receive link of the first device includes the second low-pass filter and the second high-pass filter. In this embodiment, the first communication rate is less than the second communication rate. The first device sends a low-rate signal at the transmit end of the first device. The low-rate signal first passes through the first low-pass filter (a passband frequency is a first passband frequency f2) to filter out a high-frequency signal (an interference signal). In this case, the first high-pass filter on the transmit link may be bypassed. In other words, the signal is transmitted to the second device by using an isolator instead of the first high-pass filter.

The receive end of the first device receives a high-rate signal. The high-rate signal first passes through an isolator. A part of a low-rate signal sent by the first device is coupled to the receive end by using the isolator. After the received high-rate signal and the transmitted low-rate signal that are mixed pass through the second high-pass filter (a passband frequency is the second passband frequency f5), the transmitted low-rate signal is filtered out, and the low-frequency signal is also filtered out from the high-rate signal. In this case, a start frequency of the received high-rate signal is f5, and an end frequency is f1. After the foregoing processing, the high-rate signal and the low-rate signal at the receive end of the first device are separated on a spectrum. EC processing does not need to be performed at the receive end of the first device.

S408: The second device determines, based on a prestored correspondence between an asymmetric rate transmission capability and the passband frequency information, the passband frequency information corresponding to the second asymmetric rate transmission capability. The passband frequency information includes a first passband frequency, a second passband frequency, and a third passband frequency.

A process in which the second device determines the passband frequency information corresponding to the second asymmetric rate transmission capability is the same as a process in which the first device determines the passband frequency information corresponding to the first asymmetric rate transmission capability in step S407. Details are not described herein again.

S409: Based on the passband frequency information, the second device selects, from the data transmit link, a high-pass filter and/or a low-pass filter corresponding to the passband frequency information to perform filtering processing, and selects, from the data receive link, a high-pass filter and/or a low-pass filter corresponding to the passband frequency information to perform filtering processing.

Specifically, different passband frequency information corresponds to different high-pass filters and different low-pass filters. The high-pass filter and the low-pass filter on the corresponding data transmit link and the high-pass filter and the low-pass filter on the data receive link may be determined based on the passband frequency information. In other words, the data transmit link of the second device includes the first low-pass filter and the first high-pass filter, and the data receive link of the second device includes the second low-pass filter and the second high-pass filter. In this embodiment, the first communication rate is less than the second communication rate. The second device sends a high-rate signal at the transmit end of the second device. The high-rate signal first passes through the first low-pass filter (a passband frequency is the third passband frequency f1) to filter out a high-frequency signal (an interference signal). Then the processed signal enters the first high-pass filter (a passband frequency is the second passband frequency f5). The first high-pass filter filters out a low-frequency signal with a frequency overlapping a frequency of a low-rate signal, to implement frequency separation between a high-rate signal and a low-rate signal.

The receive end of the second device receives a low-rate signal. The low-rate signal first passes through an isolator. A part of a high-rate signal sent by the second device is coupled to the receive end by using the isolator. Then the second high-pass filter (a bandpass frequency is the second bandpass frequency f5) is connected. The high-rate signal and the low-rate signal that are mixed pass through the second low-pass filter (a passband frequency is the first passband frequency f2), and the high-rate signal is filtered out. In this case, a start frequency of the received low-rate signal is 0, and an end frequency is f2. After the foregoing processing, the high-rate signal and the low-rate signal at the receive end of the second device are separated on a spectrum. EC processing does not need to be performed at the receive end of the second device.

It may be understood that, to ensure universality, one device supports high and low rates in both two directions. In another scenario, the first device may send the high-rate signal, and the second device may send the low-rate signal. In other words, when the high and low rates in the two directions are exchanged, in this case, receiving the low-rate signal is changed to receiving the high-rate signal. A processing process at the transmit end and the receive end of the first device is a processing process at the transmit end and the receive end of the second device. A processing process at the transmit end and the receive end of the second device is a processing process at the transmit end and the receive end of the first device.

In the foregoing processing process, asymmetric rate transmission at a plurality of rates is implemented between the first device and the second device, and a high-rate signal and a low-rate signal at the receive end are separated on a spectrum. Therefore, EC cancellation does not need to be performed at the receive end, thereby reducing power consumption. In addition, symmetric rate transmission is also compatible.

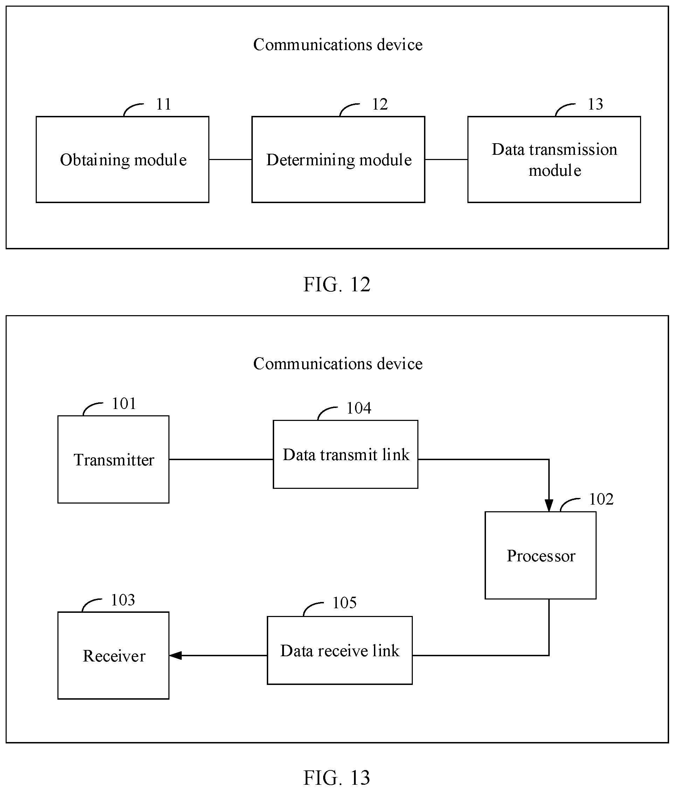

FIG. 12 is a schematic diagram of a structure of an embodiment of a communications device according to this application. As shown in FIG. 12, the apparatus in this embodiment may include an obtaining module 11, a determining module 12, and a data transmission module 13. The obtaining module 11 is configured to: obtain a second communication rate of a second device, and obtain asymmetric rate transmission capability information supported by the second device.

The determining module 12 is configured to determine, based on asymmetric rate transmission capability information supported by the communications device, the asymmetric rate transmission capability information supported by the second device, a first communication rate of the communications device, and the second communication rate, a first asymmetric rate transmission capability supported by both the communications device and the second device. The first asymmetric rate transmission capability includes two communication rates used to implement asymmetric transmission.

The data transmission module 13 is configured to: determine passband frequency information corresponding to the first asymmetric rate transmission capability; and based on the passband frequency information, select, from a data transmit link, a high-pass filter and/or a low-pass filter corresponding to the passband frequency information to perform filtering processing, and select, from a data receive link, a high-pass filter and/or a low-pass filter corresponding to the passband frequency information to perform filtering processing.

Further, the passband frequency information includes a first passband frequency, a second passband frequency, and a third passband frequency. A start frequency of a spectrum corresponding to a low communication rate in the first asymmetric rate transmission capability is 0, and an end frequency is the first passband frequency. A start frequency of a spectrum corresponding to a high communication rate in the first asymmetric rate transmission capability is the second passband frequency, and an end frequency is the third passband frequency. A communication rate is a rate at which a device sends data to a peer device. The data transmission module 13 is configured to:
determine, based on a prestored correspondence between an asymmetric rate transmission capability and the passband frequency information, the passband frequency information corresponding to the first asymmetric rate transmission capability.

Further, the data transmit link of the communications device includes a first low-pass filter and a first high-pass filter, and the data receive link of the communications device includes a second low-pass filter and a second high-pass filter. The data transmission module 13 is configured to:
if the first communication rate is less than the second communication rate, perform filtering processing on the data transmit link by using the first low-pass filter, where a passband frequency of the first low-pass filter is the first passband frequency; and perform, by the communications device, filtering processing on the data receive link by using the second high-pass filter, where a passband frequency of the second high-pass filter is the second passband frequency; or
if the first communication rate is greater than the second communication rate, perform filtering processing on the data transmit link by using the first low-pass filter and the first high-pass filter, a passband frequency of the first low-pass filter is the third passband frequency, a passband frequency of the first high-pass filter is the second passband frequency; and perform, by the communications device, filtering processing on the data receive link by using the second low-pass filter, where a passband frequency of the second low-pass filter is the first passband frequency.

Further, the determining module 12 is configured to:
determine, based on the asymmetric rate transmission capability information supported by the communications device and the asymmetric rate transmission capability information supported by the second device, asymmetric rate transmission capability information shared by the communications device and the second device; and
determine that an asymmetric rate transmission capability matching the first communication rate and the second communication rate in the asymmetric rate transmission capability information shared by the communications device and the second device is the first asymmetric rate transmission capability.

Further, the determining module 12 is configured to:
prioritize, based on the first communication rate and the second communication rate, the asymmetric rate transmission capability information supported by the communications device, to obtain the asymmetric rate transmission capability information in a first order, where an asymmetric rate transmission capability including two communication rates separately matching data transmission directions and magnitudes of the first communication rate and the second communication rate has a highest priority;
prioritize, based on the first communication rate and the second communication rate, the asymmetric rate transmission capability information supported by the second device, to obtain the asymmetric rate transmission capability information in a second order; and
determine the first asymmetric rate transmission capability based on the asymmetric rate transmission capability information in the first order and the asymmetric rate transmission capability information in the second order.

Further, the obtaining module 11 is configured to:
receive indication information sent by the second device, where the indication information is used to indicate the asymmetric rate transmission capability information supported by the second device.

Further, the obtaining module 11 is further configured to obtain, based on upper-layer configuration information, the asymmetric rate transmission capability information supported by the communications device.

Further, the data transmission module 13 is further configured to:
before the passband frequency information corresponding to the first asymmetric rate transmission capability is determined, perform link training with the second device, where the link training includes channel equalization coefficient training.

Further, the data transmission module 13 is further configured to:
before the passband frequency information corresponding to the first asymmetric rate transmission capability is determined, send the first asymmetric rate transmission capability to the second device;
receive second asymmetric rate transmission capability information sent by the second device; and
determine that the first asymmetric rate transmission capability is the same as the second asymmetric rate transmission capability information.

Further, the data transmission module 13 is further configured to: before the obtaining module obtains the asymmetric rate transmission capability information supported by the second device, determine that the first communication rate is different from the second communication rate.

Further, the data transmission module 13 is further configured to:
when it is determined that the first communication rate is the same as the second communication rate, perform link training with the second device, where the link training includes channel equalization coefficient training and echo cancellation coefficient training; and
perform data transmission with the second device based on a symmetric rate transmission capability supported by the communications device and the second device.

The apparatus in this embodiment may be used to execute the technical solutions of the foregoing method embodiments. The implementation principles and technical effects are similar, and are not further described herein.

FIG. 13 is a schematic diagram of a structure of a communications device according to this application. The communications device includes a receiver 103, a processor 102, a data transmit link 104, a data receive link 105, and a transmitter 101.

The receiver 103 is configured to: obtain a second communication rate of a second device, and obtain asymmetric rate transmission capability information supported by the second device.

The processor 102 is configured to determine, based on asymmetric rate transmission capability information supported by the communications device, the asymmetric rate transmission capability information supported by the second device, a first communication rate of the communications device, and the second communication rate, a first asymmetric rate transmission capability supported by both the communications device and the second device. The first asymmetric rate transmission capability includes two communication rates used to implement asymmetric transmission.

The processor 102 is further configured to determine passband frequency information corresponding to the first asymmetric rate transmission capability.

At least one high-pass filter and at least one low-pass filter are disposed on the data transmit link 104.

At least one high-pass filter and at least one low-pass filter are configured on the data receive link 105.

The transmitter 101 is configured to send a data signal to the second device.

The receiver 103 is further configured to receive a data signal sent by the second device.

The processor 102 is further configured to: based on the passband frequency information, select, from the data transmit link, a high-pass filter and/or a low-pass filter corresponding to the passband frequency information to perform filtering processing, and select, from the data receive link, a high-pass filter and/or a low-pass filter corresponding to the passband frequency information to perform filtering processing.

Further, the passband frequency information includes a first passband frequency, a second passband frequency, and a third passband frequency. A start frequency of a spectrum corresponding to a low communication rate in the first asymmetric rate transmission capability is 0, and an end frequency is the first passband frequency. A start frequency of a spectrum corresponding to a high communication rate in the first asymmetric rate transmission capability is the second passband frequency, and an end frequency is the third passband frequency. A communication rate is a rate at which a device sends data to a peer device.

The processor 102 is configured to determine, based on a prestored correspondence between an asymmetric rate transmission capability and the passband frequency information, the passband frequency information corresponding to the first asymmetric rate transmission capability.

Further, the data transmit link of the communications device includes a first low-pass filter and a first high-pass filter, and the data receive link of the communications device includes a second low-pass filter and a second high-pass filter. The processor 102 is configured to:
if the first communication rate is less than the second communication rate, perform filtering processing on the data transmit link by using the first low-pass filter, where a passband frequency of the first low-pass filter is the first passband frequency; and perform, by the communications device, filtering processing on the data receive link by using the second high-pass filter, where a passband frequency of the second high-pass filter is the second passband frequency; or
if the first communication rate is greater than the second communication rate, perform filtering processing on the data transmit link by using the first low-pass filter and the first high-pass filter, where a passband frequency of the first low-pass filter is the third passband frequency, and a passband frequency of the first high-pass filter is the second passband frequency; and perform, by the communications device, filtering processing on the data receive link by using the second low-pass filter, where a passband frequency of the second low-pass filter is the first passband frequency.

Further, the processor 102 is configured to:
determine, based on the asymmetric rate transmission capability information supported by the communications device and the asymmetric rate transmission capability information supported by the second device, asymmetric rate transmission capability information shared by the communications device and the second device; and
determine that an asymmetric rate transmission capability matching the first communication rate and the second communication rate in the asymmetric rate transmission capability information shared by the communications device and the second device is the first asymmetric rate transmission capability.

Further, the processor 102 is configured to:
prioritize, based on the first communication rate and the second communication rate, the asymmetric rate transmission capability information supported by the communications device, to obtain the asymmetric rate transmission capability information in a first order, where an asymmetric rate transmission capability including two communication rates separately matching data transmission directions and magnitudes of the first communication rate and the second communication rate has a highest priority;
prioritize, based on the first communication rate and the second communication rate, the asymmetric rate transmission capability information supported by the second device, to obtain the asymmetric rate transmission capability information in a second order; and
determine the first asymmetric rate transmission capability based on the asymmetric rate transmission capability information in the first order and the asymmetric rate transmission capability information in the second order.

Further, the receiver 103 is configured to:
receive indication information sent by the second device, where the indication information is used to indicate the asymmetric rate transmission capability information supported by the second device.

Further, the receiver 103 is further configured to:
obtain, based on upper-layer configuration information, the asymmetric rate transmission capability information supported by the communications device.

Further, the processor 102 is further configured to:
before the passband frequency information corresponding to the first asymmetric rate transmission capability is determined, perform link training with the second device, where the link training includes channel equalization coefficient training.

Further, the processor 102 is further configured to:
before the passband frequency information corresponding to the first asymmetric rate transmission capability is determined, send the first asymmetric rate transmission capability to the second device;
receive second asymmetric rate transmission capability information sent by the second device; and
determine that the first asymmetric rate transmission capability is the same as the second asymmetric rate transmission capability information.

Further, the processor 102 is further configured to:
before the receiver obtains the asymmetric rate transmission capability information supported by the second device, determine that the first communication rate is different from the second communication rate.

Further, the processor 102 is further configured to:
when it is determined that the first communication rate is the same as the second communication rate, perform link training with the second device, where the link training includes channel equalization coefficient training and echo cancellation coefficient training; and
perform data transmission with the second device based on a symmetric rate transmission capability supported by the communications device and the second device.

This application further provides a computer readable storage medium. The computer readable storage medium stores executable instructions. When at least one processor of a communications device executes the executable instructions, the communications device executes the communication method provided in the foregoing implementations.

This application further provides a program product. The program product includes executable instructions. The executable instructions are stored in a computer readable storage medium. At least one processor of a communications device may read the executable instructions from the computer readable storage medium. The at least one processor executes the executable instructions, so that the communications device performs the communication method provided in the foregoing implementations.

A person of ordinary skill in the art may understand that all or some of the foregoing embodiments may be implemented by software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive (SSD)), or the like.

## Claims

1. A communication method, comprising:
obtaining, by a first device, a second communication rate of a second device, and obtaining asymmetric rate transmission capability information supported by the second device;
determining, by the first device, based on asymmetric rate transmission capability information supported by the first device, the asymmetric rate transmission capability information supported by the second device, a first communication rate of the first device, and the second communication rate, a first asymmetric rate transmission capability supported by both the first device and the second device, wherein the first asymmetric rate transmission capability comprises two communication rates used to implement asymmetric rate transmission; and
determining, by the first device, passband frequency information corresponding to the first asymmetric rate transmission capability; and based on the passband frequency information, selecting, from a data transmit link, a high-pass filter and/or a low-pass filter corresponding to the passband frequency information to perform filtering processing, and selecting, from a data receive link, a high-pass filter and/or a low-pass filter corresponding to the passband frequency information to perform filtering processing.

2. The method according to claim 1, wherein the passband frequency information comprises a first passband frequency, a second passband frequency, and a third passband frequency; a start frequency of a spectrum corresponding to a low communication rate in the first asymmetric rate transmission capability is 0, and an end frequency is the first passband frequency; a start frequency of a spectrum corresponding to a high communication rate in the first asymmetric rate transmission capability is the second passband frequency, and an end frequency is the third passband frequency; and a communication rate is a rate at which a device sends data to a peer device; and
the determining, by the first device, passband frequency information corresponding to the first asymmetric rate transmission capability comprises:
determining, by the first device based on a prestored correspondence between an asymmetric rate transmission capability and the passband frequency information, the passband frequency information corresponding to the first asymmetric rate transmission capability.

3. The method according to claim 2, wherein the data transmit link of the first device comprises a first low-pass filter and a first high-pass filter, and the data receive link of the first device comprises a second low-pass filter and a second high-pass filter; and the based on the passband frequency information, selecting, from a data transmit link, a high-pass filter and/or a low-pass filter corresponding to the passband frequency information to perform filtering processing, and selecting, from a data receive link, a high-pass filter and/or a low-pass filter corresponding to the passband frequency information to perform filtering processing comprises:
if the first communication rate is less than the second communication rate, performing, by the first device, filtering processing on the data transmit link by using the first low-pass filter, wherein a passband frequency of the first low-pass filter is the first passband frequency; and performing filtering processing on the data receive link by using the second high-pass filter, wherein a passband frequency of the second high-pass filter is the second passband frequency; or
if the first communication rate is greater than the second communication rate, performing, by the first device, filtering processing on the data transmit link by using the first low-pass filter and the first high-pass filter, wherein a passband frequency of the first low-pass filter is the third passband frequency, and a passband frequency of the first high-pass filter is the second passband frequency; and performing filtering processing on the data receive link by using the second low-pass filter, wherein a passband frequency of the second low-pass filter is the first passband frequency.

4. The method according to any one of claims 1 to 3, wherein the determining, by the first device, based on asymmetric rate transmission capability information supported by the first device, the asymmetric rate transmission capability information supported by the second device, a first communication rate of the first device, and the second communication rate, a first asymmetric rate transmission capability supported by both the first device and the second device comprises:
determining, by the first device based on the asymmetric rate transmission capability information supported by the first device and the asymmetric rate transmission capability information supported by the second device, asymmetric rate transmission capability information shared by the first device and the second device; and
determining, by the first device, that an asymmetric rate transmission capability matching the first communication rate and the second communication rate in the asymmetric rate transmission capability information shared by the first device and the second device is the first asymmetric rate transmission capability.

5. The method according to any one of claims 1 to 3, wherein the determining, by the first device, based on asymmetric rate transmission capability information supported by the first device, the asymmetric rate transmission capability information supported by the second device, a first communication rate of the first device, and the second communication rate, a first asymmetric rate transmission capability supported by both the first device and the second device comprises:
prioritizing, by the first device based on the first communication rate and the second communication rate, the asymmetric rate transmission capability information supported by the first device, to obtain the asymmetric rate transmission capability information in a first order, wherein an asymmetric rate transmission capability comprising two communication rates separately matching data transmission directions and magnitudes of the first communication rate and the second communication rate has a highest priority;
prioritizing, by the first device based on the first communication rate and the second communication rate, the asymmetric rate transmission capability information supported by the second device, to obtain the asymmetric rate transmission capability information in a second order; and
determining, by the first device, the first asymmetric rate transmission capability based on the asymmetric rate transmission capability information in the first order and the asymmetric rate transmission capability information in the second order.

6. The method according to any one of claims 1 to 5, wherein the obtaining, by the first device, asymmetric rate transmission capability information supported by the second device comprises:
receiving, by the first device, indication information sent by the second device, wherein the indication information is used to indicate the asymmetric rate transmission capability information supported by the second device.

7. The method according to claim 1, wherein the method further comprises:
obtaining, by the first device based on upper-layer configuration information, the asymmetric rate transmission capability information supported by the first device.

8. The method according to any one of claims 1 to 7, wherein before the determining, by the first device, passband frequency information corresponding to the first asymmetric rate transmission capability, the method further comprises:
performing, by the first device, link training with the second device, wherein the link training comprises channel equalization coefficient training.

9. The method according to claim 1, wherein before the determining, by the first device, passband frequency information corresponding to the first asymmetric rate transmission capability, the method further comprises:
sending, by the first device, the first asymmetric rate transmission capability to the second device; and
receiving, by the first device, second asymmetric rate transmission capability information sent by the second device, and determining that the first asymmetric rate transmission capability is the same as the second asymmetric rate transmission capability information.

10. The method according to claim 1, wherein before the obtaining, by the first device, asymmetric rate transmission capability information supported by the second device, the method further comprises:
determining, by the first device, that the first communication rate is different from the second communication rate.

11. The method according to claim 10, wherein the method further comprises:
when determining that the first communication rate is the same as the second communication rate, performing, by the first device, link training with the second device, wherein the link training comprises channel equalization coefficient training and echo cancellation coefficient training; and
performing, by the first device, data transmission with the second device based on a symmetric rate transmission capability supported by the first device and the second device.

12. A communications device, comprising:
an obtaining module, configured to: obtain a second communication rate of a second device, and obtain asymmetric rate transmission capability information supported by the second device;
a determining module, configured to determine, based on asymmetric rate transmission capability information supported by the communications device, the asymmetric rate transmission capability information supported by the second device, a first communication rate of the communications device, and the second communication rate, a first asymmetric rate transmission capability supported by both the communications device and the second device, wherein the first asymmetric rate transmission capability comprises two communication rates used to implement asymmetric transmission; and
a data transmission module, configured to: determine passband frequency information corresponding to the first asymmetric rate transmission capability; and based on the passband frequency information, select, from a data transmit link, a high-pass filter and/or a low-pass filter corresponding to the passband frequency information to perform filtering processing, and select, from a data receive link, a high-pass filter and/or a low-pass filter corresponding to the passband frequency information to perform filtering processing.

13. The communications device according to claim 12, wherein the passband frequency information comprises a first passband frequency, a second passband frequency, and a third passband frequency; a start frequency of a spectrum corresponding to a low communication rate in the first asymmetric rate transmission capability is 0, and an end frequency is the first passband frequency; a start frequency of a spectrum corresponding to a high communication rate in the first asymmetric rate transmission capability is the second passband frequency, and an end frequency is the third passband frequency; and a communication rate is a rate at which a device sends data to a peer device; and
the data transmission module is configured to determine, based on a prestored correspondence between an asymmetric rate transmission capability and the passband frequency information, the passband frequency information corresponding to the first asymmetric rate transmission capability.

14. The communications device according to claim 13, wherein the data transmit link of the communications device comprises a first low-pass filter and a first high-pass filter, the data receive link of the communications device comprises a second low-pass filter and a second high-pass filter, and the data transmission module is configured to:
if the first communication rate is less than the second communication rate, perform filtering processing on the data transmit link by using the first low-pass filter, wherein a passband frequency of the first low-pass filter is the first passband frequency; and perform filtering processing on the data receive link by using the second high-pass filter, wherein a passband frequency of the second high-pass filter is the second passband frequency; or
if the first communication rate is greater than the second communication rate, perform filtering processing on the data transmit link by using the first low-pass filter and the first high-pass filter, wherein a passband frequency of the first low-pass filter is the third passband frequency, and a passband frequency of the first high-pass filter is the second passband frequency; and perform, by the communications device, filtering processing on the data receive link by using the second low-pass filter, wherein a passband frequency of the second low-pass filter is the first passband frequency.

15. The communications device according to any one of claims 12 to 14, wherein the determining module is configured to:
determine, based on the asymmetric rate transmission capability information supported by the communications device and the asymmetric rate transmission capability information supported by the second device, asymmetric rate transmission capability information shared by the communications device and the second device; and
determine that an asymmetric rate transmission capability matching the first communication rate and the second communication rate in the asymmetric rate transmission capability information shared by the communications device and the second device is the first asymmetric rate transmission capability.

16. The communications device according to any one of claims 12 to 14, wherein the determining module is configured to:
prioritize, based on the first communication rate and the second communication rate, the asymmetric rate transmission capability information supported by the communications device, to obtain the asymmetric rate transmission capability information in a first order, wherein an asymmetric rate transmission capability comprising two communication rates separately matching data transmission directions and magnitudes of the first communication rate and the second communication rate has a highest priority;
prioritize, based on the first communication rate and the second communication rate, the asymmetric rate transmission capability information supported by the second device, to obtain the asymmetric rate transmission capability information in a second order; and
determine the first asymmetric rate transmission capability based on the asymmetric rate transmission capability information in the first order and the asymmetric rate transmission capability information in the second order.

17. The communications device according to any one of claims 12 to 16, wherein the obtaining module is configured to:
receive indication information sent by the second device, wherein the indication information is used to indicate the asymmetric rate transmission capability information supported by the second device.

18. The communications device according to claim 12, wherein the obtaining module is further configured to:
obtain, based on upper-layer configuration information, the asymmetric rate transmission capability information supported by the communications device.

19. The communications device according to any one of claims 12 to 18, wherein the data transmission module is further configured to:
before the determining passband frequency information corresponding to the first asymmetric rate transmission capability, perform link training with the second device, wherein the link training comprises channel equalization coefficient training.

20. The communications device according to claim 12, wherein the data transmission module is further configured to:
before the determining passband frequency information corresponding to the first asymmetric rate transmission capability, send the first asymmetric rate transmission capability to the second device;
receive second asymmetric rate transmission capability information sent by the second device; and
determine that the first asymmetric rate transmission capability is the same as the second asymmetric rate transmission capability information.

21. The communications device according to claim 12, wherein the data transmission module is further configured to:
before the obtaining asymmetric rate transmission capability information supported by the second device, determine that the first communication rate is different from the second communication rate.

22. The communications device according to claim 21, wherein the data transmission module is further configured to:
when it is determined that the first communication rate is the same as the second communication rate, perform link training with the second device, wherein the link training comprises channel equalization coefficient training and echo cancellation coefficient training; and
perform data transmission with the second device based on a symmetric rate transmission capability supported by the communications device and the second device.

23. A communications device, comprising:
a receiver, configured to: obtain a second communication rate of a second device, and obtain asymmetric rate transmission capability information supported by the second device;
a processor, configured to determine, based on asymmetric rate transmission capability information supported by the communications device, the asymmetric rate transmission capability information supported by the second device, a first communication rate of the communications device, and the second communication rate, a first asymmetric rate transmission capability supported by both the communications device and the second device, wherein the first asymmetric rate transmission capability comprises two communication rates used to implement asymmetric transmission, wherein
the processor is further configured to determine passband frequency information corresponding to the first asymmetric rate transmission capability;
a data transmit link, wherein at least one high-pass filter and at least one low-pass filter are disposed on the data transmit link;
a data receive link, wherein at least one high-pass filter and at least one low-pass filter are configured on the data receive link; and
a transmitter, configured to send a data signal to the second device, wherein
the receiver is further configured to receive a data signal sent by the second device; and
the processor is further configured to: based on the passband frequency information, select, from the data transmit link, a high-pass filter and/or a low-pass filter corresponding to the passband frequency information to perform filtering processing, and select, from the data receive link, a high-pass filter and/or a low-pass filter corresponding to the passband frequency information to perform filtering processing.

24. The communications device according to claim 23, wherein the passband frequency information comprises a first passband frequency, a second passband frequency, and a third passband frequency; a start frequency of a spectrum corresponding to a low communication rate in the first asymmetric rate transmission capability is 0, and an end frequency is the first passband frequency; a start frequency of a spectrum corresponding to a high communication rate in the first asymmetric rate transmission capability is the second passband frequency, and an end frequency is the third passband frequency; and a communication rate is a rate at which a device sends data to a peer device; and
the processor is configured to determine, based on a prestored correspondence between an asymmetric rate transmission capability and the passband frequency information, the passband frequency information corresponding to the first asymmetric rate transmission capability.

25. The communications device according to claim 24, wherein the data transmit link of the communications device comprises a first low-pass filter and a first high-pass filter, the data receive link of the communications device comprises a second low-pass filter and a second high-pass filter, and the processor is configured to:
if the first communication rate is less than the second communication rate, perform filtering processing on the data transmit link by using the first low-pass filter, wherein a passband frequency of the first low-pass filter is the first passband frequency; and perform, by the communications device, filtering processing on the data receive link by using the second high-pass filter, wherein a passband frequency of the second high-pass filter is the second passband frequency; or
if the first communication rate is greater than the second communication rate, perform filtering processing on the data transmit link by using the first low-pass filter and the first high-pass filter, wherein a passband frequency of the first low-pass filter is the third passband frequency, and a passband frequency of the first high-pass filter is the second passband frequency; and perform, by the communications device, filtering processing on the data receive link by using the second low-pass filter, wherein a passband frequency of the second low-pass filter is the first passband frequency.

26. The communications device according to any one of claims 23 to 25, wherein the processor is configured to:
determine, based on the asymmetric rate transmission capability information supported by the communications device and the asymmetric rate transmission capability information supported by the second device, asymmetric rate transmission capability information shared by the communications device and the second device; and
determine that an asymmetric rate transmission capability matching the first communication rate and the second communication rate in the asymmetric rate transmission capability information shared by the communications device and the second device is the first asymmetric rate transmission capability.

27. The communications device according to any one of claims 23 to 25, wherein the processor is configured to:
prioritize, based on the first communication rate and the second communication rate, the asymmetric rate transmission capability information supported by the communications device, to obtain the asymmetric rate transmission capability information in a first order, wherein an asymmetric rate transmission capability comprising two communication rates separately matching data transmission directions and magnitudes of the first communication rate and the second communication rate has a highest priority;
prioritize, based on the first communication rate and the second communication rate, the asymmetric rate transmission capability information supported by the second device, to obtain the asymmetric rate transmission capability information in a second order; and
determine the first asymmetric rate transmission capability based on the asymmetric rate transmission capability information in the first order and the asymmetric rate transmission capability information in the second order.

28. The communications device according to any one of claims 23 to 27, wherein the receiver is configured to:
receive indication information sent by the second device, wherein the indication information is used to indicate the asymmetric rate transmission capability information supported by the second device.

29. The communications device according to claim 23, wherein the receiver is further configured to:
obtain, based on upper-layer configuration information, the asymmetric rate transmission capability information supported by the communications device.

30. The communications device according to any one of claims 23 to 29, wherein the processor is further configured to:
before the determining passband frequency information corresponding to the first asymmetric rate transmission capability, perform link training with the second device, wherein the link training comprises channel equalization coefficient training.

31. The communications device according to claim 23, wherein the processor is further configured to:
before the determining passband frequency information corresponding to the first asymmetric rate transmission capability, send the first asymmetric rate transmission capability to the second device;
receive second asymmetric rate transmission capability information sent by the second device; and
determine that the first asymmetric rate transmission capability is the same as the second asymmetric rate transmission capability information.

32. The communications device according to claim 23, wherein the processor is further configured to:
before the receiver obtains the asymmetric rate transmission capability information supported by the second device, determine that the first communication rate is different from the second communication rate.

33. The communications device according to claim 32, wherein the processor is further configured to:
when it is determined that the first communication rate is the same as the second communication rate, perform link training with the second device, wherein the link training comprises channel equalization coefficient training and echo cancellation coefficient training; and
perform data transmission with the second device based on a symmetric rate transmission capability supported by the communications device and the second device.

34. A computer-readable storage medium, wherein the computer-readable storage medium stores executable instructions; and when at least one processor of a communications device executes the executable instructions, the communications device performs the communication method according to any one of claims 1 to 11.
